(19) Europäisches Patentamt
European Patent Office
Office européen des brevets

(11) EP 2 499 435 B1

(12) # EUROPEAN PATENT SPECIFICATION

(45) Date of publication and mention of the grant of the patent:
**16.01.2019 Bulletin 2019/03**

(21) Application number: **10830696.0**

(22) Date of filing: **11.11.2010**

(51) Int Cl.:
***F24F 11/00*** *(2018.01)* ***G01M 3/32*** *(2006.01)*

(86) International application number:
**PCT/US2010/056315**

(87) International publication number:
**WO 2011/060121 (19.05.2011 Gazette 2011/20)**

(54) **REFRIGERANT LEAK DETECTION SYSTEM AND METHOD**

SYSTEM UND VERFAHREN ZUR KÜHLMITTELLECKERKENNUNG

SYSTÈME DE DÉTECTION DE FUITE DE FRIGORIGÈNE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2009 US 260222 P**
**10.11.2010 US 943626**

(43) Date of publication of application:
**19.09.2012 Bulletin 2012/38**

(73) Proprietor: **Emerson Retail Services INC.**
**Kennesaw, Georgia 30144 (US)**

(72) Inventor: **CLARK, E. Todd**
**Kennesaw, Georgia 30144 (US)**

(74) Representative: **J A Kemp**
**14 South Square**
**Gray's Inn**
**London WC1R 5JJ (GB)**

(56) References cited:

| | |
|---|---|
| **US-A- 5 564 280** | **US-A1- 2002 139 128** |
| **US-A1- 2005 056 031** | **US-A1- 2006 021 362** |
| **US-A1- 2006 042 276** | **US-A1- 2007 089 435** |
| **US-A1- 2007 089 438** | **US-A1- 2008 033 674** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present disclosure relates to refrigeration systems and, more specifically, to monitoring refrigerant levels in a refrigeration system.

This section provides background information related to the present disclosure which is not necessarily prior art.

Refrigeration systems may be essential to many businesses. For example, food retailers may rely on refrigerators to ensure quality and safety of food products. Many other businesses may have products or materials that must be refrigerated or maintained at a lowered temperature. HVAC systems allow people to remain comfortable where they shop, work or live. Any breakdown in these or other refrigeration systems or variation in performance of refrigeration systems can affect health, safety and profitability. Thus, it may be important to monitor and maintain the equipment of the refrigeration system to ensure its operation at expected levels.

It may be in the best interests of refrigeration system users to closely monitor the performance of the refrigeration systems to maximize efficiency and reduce operational costs. Generally speaking, users may lack the expertise to accurately analyze system performance data and relate that data to quality, safety and profitability, as well as the expertise to monitor the refrigeration system for performance, maintenance and efficiency.

US 2006/042276 discloses the pre-characterising portion of claim 1.

US 2008/033674, US 2006/021362 and US 2007/089435 disclose refrigeration systems and methods.

This section provides a general summary of the disclosure, and is not a comprehensive disclosure of its full scope or all of its features. The invention is defined in the claims.

A system for detecting refrigerant leak in a refrigeration system is described herein. The system includes a refrigerant level sensor that senses a level of refrigerant in the refrigeration apparatus and generates refrigerant level data based on the level of refrigerant and a plurality of system sensors that sense conditions corresponding to the refrigeration apparatus and generate system data based on the sensed conditions. The system further comprises a model database that stores a plurality of models defining expected refrigerant levels based on previously recorded system data, wherein each of the models has an upper control limit and a lower control limit associated therewith and a model selecting module that selects a model from the model database based on the system data and the previously recorded system data. The system also comprises a refrigerant level prediction module that generates an expected refrigerant level based on the system data and the selected model and a notification module that generates an notification when a difference between the expected refrigerant level and the refrigerant level reading is one of greater than an upper control limit and less than a lower control limit in at least one consecutive reading.

In a feature of system the system may further comprise a model creation module that creates a model based on the refrigerant level data and the system data.

In another feature of system the model created by the model creation module is further dependent on hours of the day at which the refrigerant level data and the system data were sampled.

In another feature of system the model creation module performs a linear regression to determine a non-compensated linear combination of the system data that estimates the refrigerant level.

In another feature of system the results of the linear regression are used to determine an error table having entries corresponding to a difference between the estimate of the refrigerant level and the refrigerant level data at a particular hour of the day.

In another feature of the system the model creation module generates a table storing an hour effect indicating amount of effect an hour of the day has on the refrigerant level data for each hour of the day.

In another feature of the system the model creation module performs an effect of an hour compensated linear regression to determine a linear combination of the system data and the hour effect to estimate the refrigerant level.

In another feature of the system the notification module generates a notification that refrigerant was added from the system when the difference between the expected refrigerant level and the refrigerant level reading is greater than the upper control limit in a predetermined number of consecutive readings.

In another feature of the system the notification module generates a notification that refrigerant is leaking from the system when the difference between the expected refrigerant level and the refrigerant level reading is less than the lower control limit in a predetermined number of consecutive readings.

In another feature of the system the system data includes an ambient temperature reading, a condenser temperature reading and a discharge pressure reading.

In another aspect of the disclosure, a method for detecting refrigerant leak in a refrigeration system is disclosed. The method comprises sensing a level of refrigerant in the refrigeration system and generating refrigerant level data based on the level of refrigerant. The method further comprises sensing conditions corresponding to the refrigeration system and generating system data based on the sensed conditions. The method also includes storing, in a model database, a plurality of models that define expected refrigerant levels based on previously recorded system data. Each of the models has an upper control limit and a lower control limit associated therewith. The method further comprises selecting a model from the model database based on the system data and the previously recorded system data and generating an expected refrigerant level based on the system data and the selected model. The method further comprises generating a notification when a difference between the expected refrigerant level and the refrigerant level reading is one of greater than an upper control limit and less than a lower control limit in at least one consecutive reading.

In another feature of the method, the method further comprises creating a model based on the refrigerant level data and the system data.

In another feature of the method the created model is further dependant on hours of the day at which the refrigerant level data and the system data were sampled.

In another feature of the method, the method further comprises performing a linear regression on the system data and the refrigerant level data to determine a non-compensated linear combination of the system data that estimates the refrigerant level.

In another feature of the method, the method further comprises determining an error table having entries corresponding to a difference between the estimate of the refrigerant level and the refrigerant level data at a particular hour of the day based on a result of the linear regression.

In another feature of the method, the method further comprises generating a table storing an hour effect indicating an amount of effect an hour of a particular day has on the refrigerant level data for each hour of the particular day.

In another feature of the method, the method further comprises performing an effect of an hour compensated linear regression to determine a linear combination of the system data and the hour effect to estimate the refrigerant level.

In another feature of the method, the generated notification indicates that refrigerant was added to the refrigeration system when the difference between the expected refrigerant level and the refrigerant level reading is greater than the upper control limit in a predetermined number of consecutive readings.

In another feature of the method, the generated notification indicates that refrigerant is leaking from the system when the difference between the expected refrigerant level and the refrigerant level reading is less than the lower control limit in a predetermined number of consecutive readings.

In another feature of the method, the system data includes an ambient temperature reading, a condenser temperature reading and a discharge pressure reading.

Figure 1 illustrates an exemplary refrigerant system;
Figure 2 illustrates an overview of an exemplary components of the refrigeration leak detection system;
Figure 3 illustrates an overview of an method performed by the refrigeration leak detection system;
Figure 4 illustrates an block diagram of exemplary components used to determine a leak status;
Figure 5 illustrates an exemplary method for determining a leak status;
Figure 6 illustrates a block diagram of exemplary components used to clean data;
Figure 7 illustrates an exemplary method to clean data;
Figure 8 illustrates a block diagram of exemplary components to validate data;
Figure 9 illustrates an exemplary method to validate data;
Figure 10 illustrates a block diagram of exemplary components to select a data model;
Figure 11 illustrates an exemplary method to select a data model;
Figure 12 illustrates a block diagram of exemplary components to create a data model;
Figure 13 illustrates an exemplary method to create a model;
Figure 14 illustrates a block diagram of exemplary components of a learning machine; and
Figure 15 illustrates an exemplary method executed by the learning machine to create a data model.

Corresponding reference numerals indicate corresponding parts throughout the several views of the drawings.

Example embodiments will now be described more fully with reference to the accompanying drawings.

With reference to Figure 1, an exemplary refrigeration system 100 is shown. The exemplary refrigeration system 100 includes a plurality of compressors 104 piped together with a common suction manifold 106 and a discharge header 108 all positioned within a compressor rack 110. A discharge output of each compressor 104 can include a respective temperature sensor 114. A pressure sensor can be used in addition to, or in place of, the temperature sensor 114. An input to the suction manifold 106 can include both a pressure sensor 118 and a temperature sensor 120. Further, a discharge outlet of the discharge header 108 can include an associated pressure sensor 124. As described in further detail below, various sensors can be implemented for monitoring refrigerant level in the refrigeration system 100.

The exemplary compressor rack 110 compresses refrigerant vapor that is delivered to a condenser 126 where the refrigerant vapor is liquefied at high pressure. The condenser 126 can include an associated ambient temperature sensor 128 and an outlet pressure sensor 130. This high-pressure liquid refrigerant may be delivered to a receiver 144. Refrigerant from the receiver 144 is then delivered to an evaporator 136. For example, evaporator 136 may be in a food refrigeration case.

A controller 140 can be used and configured or programmed to control the operation of the refrigeration system 100. In an exemplary embodimeht, the refrigeration controller 140 is an Einstein Area Controller, or E2 Controller, offered by CPC, Inc. of Atlanta, Georgia. It is appreciated that any other type of programmable controller that may be programmed can be used as well. A computer readable medium 141 is accessible to the controller 140 for storing executable code to be executed by controller 140.

Refrigerant level within the refrigeration system 100 can be a function of system load, ambient temperature, defrost status, heat reclaim status and refrigerant charge. A refrigerant level indicator 142 reads the refrigerant level within the refrigeration system 100 and provides a refrigerant level (RL) output signal. In some embodiments, the refrigerant level indicator 142 is an ultrasonic sensor that detects refrigerant level based on an ultrasonic beam. It is envisioned that other types of sensors such as float sensors or capacitive sensors may also be used as the refrigerant level indicators. The refrigerant level indicator 142 can be located at any location of the refrigeration system at which a refrigerant level may be determined. For example, refrigerant level indicator may be located at the receiver 144.

A refrigerant loss detection algorithm utilizes the refrigerant level data, along with other measured parameters, such as ambient temperature ($T_a$), discharge temperature ($T_d$) and discharge pressure ($P_d$), to determine whether there is refrigerant leakage in the refrigeration system 100. In addition, other system parameters may be used to determine whether there is leakage in the refrigeration system.

Refrigerant leak may be characterized as slow or fast. A fast leak is readily recognizable because the refrigerant level will drop to a predetermined level, e.g. zero or approximately zero, in a very short period of time. A slow leak, however, can be more difficult to recognize. One reason is that refrigerant levels in the receiver can vary widely throughout a given day. For example, defrost cycles throughout the refrigeration system result in the refrigerant levels in the receiver to vary. Similarly, changes in the ambient temperature cause the refrigerant levels to vary. To extract meaningful information, refrigerant levels can be measured and then averaged at predetermined intervals. For example, refrigerant levels may be averaged hourly ($RL_{HR}$).

If refrigerant is not present in the receiver, then it may be present in the condenser 128. The volume of refrigerant in the condenser is typically proportional to the temperature difference between the ambient air temperature and the condenser 128 temperature. Generally, refrigerant has the tendency to move to the cooler location of the condenser and the receiver in amount proportional to the temperature difference between the ambient air temperature and the condenser 128 temperature. Refrigerant loss may be detected, in part, by collectively monitoring these parameters.

Figures 2 and 3 illustrate a refrigerant leak detection system and a method for identifying a refrigerant leak, respectively. Referring to Figure 2, a block diagram illustrates an overview of the refrigerant leak detection system. Refrigerant leak detection module 304 receives measured data 302, which may include RL data and system data. The system data may include, but is not limited to, ambient temperature ($T_a$), condenser temperature ($T_d$) and discharge pressure ($P_d$). The system data and the RL data can be received directly from the sensors or can be retrieved from a measured data database 303 storing the various sensor data. It is envisioned that leak detection can run multiple times in a day, daily, or every few days. Thus, measured data database 303 stores recent RL data and system data for later analysis.

Refrigerant leak detection module 304 can also receive system parameters as input. The system parameters may be stored in a system parameter data store 306 accessible by refrigerant leak detection module 304. The system parameters can include, but are not limited to, statistical process control (SPC) data and SPC limits. The SPC data and SPC limits are statistics relating to the refrigerant level. Refrigerant leak detection module 304 can also access a model database 305 storing a plurality of data models. Data models can be in the form of a data structure containing data samples of previously recorded system data, i.e. training data, defining the behavior of a refrigerant level over a given period of time. As will be discussed, the refrigerant level canbe expressed as a linear combination of the system data, which may or may not be hourly compensated. It is envisioned, however, that other ways of representing the models can be implemented.

Refrigerant leak detection module 304 can output a leak status and/or a system notification to a user, indicating the same. Refrigerant leak detection module 304 uses the measured RL data, the measured system data, the system parameters and the data models to identify the existence of a refrigerant leak. By utilizing the models and the system data, refrigerant leak detection module 304 can determine expected RL data, and can determine the existence of a leak if the measured RL data is regularly below the expected RL data. If the system is in a leak state, the system can also generate a notification to a technician.

Figure 3 illustrates a flow diagram of a general method that the system can execute to identify a leak state. At step 402, the measured data is read from a controller. As mentioned previously, the measured data 302 may be stored in a measured data database 303, or may be received directly from the sensors. The measured data 302 may include $T_a$, $T_d$, $P_d$ and RL data. Some or all of the data can be represented as hourly averages indicating the average values throughout a particular day ($T_{aHR}$, $T_{dHR}$, $P_{dHR}$ and $RL_{HR}$).

At step 404, the system data can be analyzed to acquire an appropriate model for analysis against the RL data. The model can be retrieved from the model database 305, or can be created in the absence of an appropriate model. Greater detail on the retrieval and creation of models is provided below. In general, however, refrigeration systems are operated under varied conditions and in varied applications. System conditions such as refrigeration load, ambient temperatures, defrost status, heat reclaim status and a refrigerant charge model may influence the refrigerant levels and the behavior thereof. Also, the temperature and pressure in the condenser, as well as, the daily defrost schedule may also influence the refrigerant level. The models, whether retrieved or created, are defined so as to consider all relevant factors that have bearing on refrigerant levels.

Once a model is acquired, the system may determine the existence of a leak state at step 406 using the measured RL data, the system data and the acquired model. As can be appreciated from the amount of parameters influencing refrigerant levels and the amount of samplings that may occur over time, the received and stored system and RL data provide for rich data sets. Rich data sets allow the system to run various different types of machine learning algorithms and statistical process control methods to recognize the existence of a slow leak condition. At step 408 the data and results from steps 402 and 406 are stored and notifications can be generated, if necessary, regarding the refrigerant status. At step 410, the system waits for a predetermined amount of time before running again. The system can continue to monitor the various sensor data and store the sensor data for later analysis. It is envisioned that the system may run daily, but may run more or less frequently.

Figure 4 illustrates in greater detail an exemplary embodiment of refrigerant leak detection module 304. As mentioned, refrigerant leak detection module 304 receives system data and RL data as input. A data cleaning module 504 can be configured to receive the raw system data and RL data and may process the system can RL data so that refrigerant leak detection module 304 may be able to analyze and process the measured data. Further, data cleaning module 504 can discard any data that it determines to be unreliable. The raw data can be pre-processed so that it is at least in hourly averages. In some embodiments, each hour of the day will have an hourly average corresponding to the hour of the day. Modeling module 508 can communicate with the system parameter database 306 to receive the SPC data and limits as well as the model data. Modeling module 508 can retrieve a stored data model from a plurality of data models from the model database 305 or can create a data model for storage, in the event an appropriate model does not exist. The term model and data model can be used interchangeably.

The cleaned data and the acquired data models are communicated to an SPC module 504. SPC module 504 further uses the SPC data, including $X_{bar}$ (mean), R (range), upper control limits (UCL) and lower control limits (LCL) to determine a state of the refrigerant level error. The SPC data and limits may be calculated from previously recorded system data and the measured refrigerant level data. Further, each model may have its own SPC data and limits.

$X_{bar}$ is an average error value between the actual refrigerant level hourly averages and the expected refrigerant level hourly averages over a predetermined amount of hours. $X_{bar}$ can be calculated as follows:

$$X_{bar} = \frac{\sum_{i}^{i+n}\left(RL_{M_i} - RL_{hAVG\,i}\right)}{n} \qquad (1)$$

where $RL_{M_i}$ is the expected hourly average of hour i, $RL_{hAVG_i}$ is the hourly average of hour I, and where n is the amount of hours in a subgroup. R is the range of error values over the predetermined amount of hours. Once $X_{bar}$ and R are calculated for the subgroups, the standard deviation can be calculated according to the following:

$$\sigma = \sqrt{\frac{\sum_{i=0}^{n-1}\left(x_i - X_{bar}\right)}{n}} \qquad (2)$$

where n is the total number of instances used to calculate the mean and where $x_i$ is the refrigerant level reading at the ith instance. Using the standard deviation and the mean, the UCL may be defined as $X_{bar} + 3\sigma$ and the LCL may be defined as $X_{bar} - 3\sigma$.

The SPC module 504 may output an error indicating that the refrigerant level is too high (runOverUCLError), too low (runUnderLCLError), or in a leaking state (runUnderMeanError). Further detail on the calculation of the SPC data, and the subsequent error indications are provided in greater detail below.

Figure 5 illustrates an exemplary process that may be executed by refrigerant leak detection module 304. At step 602, the RL data and the system data, $T_d$, $T_a$, and $P_d$ are received and may be processed by data cleaning module 504. As mentioned, the RL data can be received as raw data from the refrigerant level indicator 142. Sensors can provide unreliable or "bad" data from time to time. Thus, data cleaning module 402 can identify which readings are unreliable and remove those readings from the RL data and/or the system data. Details of data cleaning are provided in greater detail below.

At step 604, the cleaned data can be stored in the measured data database 303 or can be communicated to SPC module 512 directly. At step 606, the system accesses the data for a particular day for leak detection analysis. The system may not run continously, and thus, the data of a previous day or previous sensor reading may be analyzed, as opposed to the most recently measured data.

At step 608, the data corresponding to the day being analyzed is used to select an appropriate model. The modeling module 608 can first attempt to choose a stored model from the system parameter data store using the system data. As will be described, the models define the behavior of refrigerant type based on various data, including the system data, $T_d$, $T_a$, and $P_d$. At step 610, the selected model is assessed in order to determine whether the model is suitable. To determine the reliability of a model, the absolute error value of the model against the training data, e.g. previously stored data, can be compared against a predetermined threshold, e.g. 50%. If the absolute error value of the model is less than the predetermined threshold, the model can be considered suitable. If the model is suitable, the process steps to step 618, else it steps to step 612.

At step 618, the selected data model and the RL data are analyzed. The RL data is input into the data model to generate an expected RL, or $RL_M$. The result of the analysis is used to generate the SPC data as well as the SPC errors. At step 620, the SPC errors are analyzed. The analysis can include generating SPC charts using known SPC charting algorithms. The SPC algorithm can create $X_{bar}$ (mean) and R (range) charts for both the $RL_M$ data and the $RL_{HR}$ data. For each hour, the $RL_M$ data may be compared to the $RL_{dHR}$ data to determine a refrigerant level error $RL_{error}$. For example, for each hour's data, the error can be calculated as $RL_{error}= RL_M-RL_{dHR}$. The $RL_{dHR}$ data can be divided into subgroups. For example, if the data is hourly, as in this case, and there is 24 hours worth of data, three subgroups of eight hours a piece can be generated for each day. For each subgroup, the hourly averages of the $RL_{error}$ data may be averaged. The result of this average is the $X_{bar}$ value for the subgroup. The range of the $RL_{error}$ data is also calculated to determine R. These charts may then be compared to determine whether the $RL_{error}$ data falls within upper control limits (UCL) and lower control limits (LCL) related to $RL_M$. As described above, UCL and LCL may be calculated as plus and minus three standard deviations from $X_{bar}$. An SPC counter is incremented with each consecutive time that the RL data falls outside of the UCL or LCL. Based on the SPC counter value, the existence of an error may be determined. For instance, if the $RL_{HR}$ data is measured below the LCL in seven consecutive readings, an error notification, runUnderLCLError, can be generated. If the $RL_{HR}$ data is measured above the UCL in seven consecutive readings, an error notification, runOverLCLError, can be generated. If the calculated $X_{bar}$ is continually decreasing for seven iterations, then a runUnderMeanError notification can be generated. Other variations of notification generating rules can be implemented. For example, if a number less than seven is selected, the system can identify more errors. Conversely, selecting a number greater than seven would increase the error identification robustness, but at the cost of correctly identifying errors. Also, it is envisioned that an error could be identified if the error conditions are substantially consecutive. For example, if six out of seven readings are above the UCL, a runOverLCLError can still be generated.

At step 620, the SPC error notifications are interpreted. A runOverUCLError notification can indicate that refrigerant has been added to the refrigeration system. Technically speaking, the runOverUCLError may not be an error per se, but may also indicate that refrigerant was added to the system. The system can create a notification that refrigerant has been added to the system.

A runUnderLCLError or runUnderMeanError indicates that refrigerant is leaking from the refrigeration system. The algorithm may create a notification of a refrigerant leak.

As mentioned, if at step 610 an appropriate model was not retrieved, the process steps to step 612. At step 614, the system may determine if the reason for rejecting the model was due to too much variance in the model. If so then a notification is generated thereby notifying a technician that the model creation methods may need to be refined.

At step 616, the system determines if there is more data to be analyzed, i.e. whether more RL data needs to be analyzed. If so, the system steps to the next day of RL data to be analyzed at step 622. If not, the system steps to 624, where the results are assembled and stored. It is envisioned that the notifications generated at step 618 and interpreted at 620 may be stored in an error database or communicated to a technician. Further, the system can include visual or audio indicators to warn operators or technicians of the refrigerant status in the refrigerant system.

The following sections will describe various modules and details that may be implemented in the refrigerant leak detection system. The examples provided are in no way intended to be limiting, but rather to provide greater detail in possible embodiments of the refrigerant leak detection system.

As previously mentioned, in some embodiments the measured data may need to be cleaned. Figures 6 and 7 depict a data cleaning module and a method that may be executed by the data cleaning module, respectively. Referring now to Figure 6, an exemplary data cleaning module 504 is depicted. The data cleaning module 504 receives the measured RL data and the measured system data, $T_{aHR}$, $T_{dHR}$, and $P_{dHR}$. It is envisioned, however, that the data cleaning module 504 may receive raw system data, e.g. $T_a$, $T_d$, and $P_d$ and compute the hourly averages therefrom. Data cleaning module 504 may also received previously stored data 706. Stored data 706 may include existing data in a predetermined data structure, organized by date. The data cleaning module 504 may output a data table 708 which may include cleaned hourly data $RL_{HR}$, $T_{aHR}$, $T_{dHR}$, and $P_{dHR}$ data arranged by day.

Figure 7 illustrates an exemplary method for cleaning data. The following method may be executed by data cleaning module 504, described above. It is noted that certain sensor types, such as ultrasonic sensors, may further necessitate data cleaning, as opposed to other sensor types, such as float sensors, which may not output data that requires cleaning. At step 802 the measured RL data and system data are grouped by date. At step 804, RL data for a particular date may be retrieved. Step 806 may determine whether the data is raw sensor data or in an hourly data format. If the data is in hourly average format $RL_{dHR}$, the data is determined to be clean and joined with system data for the day $T_{aHR}$, $T_{dHR}$, and $P_{dHR}$ at step 818.

If the data is raw data from a sensor, step 808 may check the sensor data to determine if it is reliable and may create notifications indicating whether the sensor is operating properly. Greater detail of determining the reliability of the data is provided below. Step 810 may skip the filtering and calculating steps if step 808 determines that the sensor data is not "believable." In this situation, that unreliable data is discarded and the system retrieves the next set of data. If the data is determined to be reliable, step 820 may determine whether there are more days to process, and if so, step 822 may select the next day for data to be cleaned in step 804. The algorithm may run until there is no longer any RL data to clean.

Figure 8 illustrates exemplary components of data cleaning module that verify the reliability of the measured RL data. A sensor validation module 904 receives the RL data. The data can be represented in an hourly average format or in a raw format. The sensor validation module 904 can execute one or more of an empty filter test, a bad filter test, a misaligned filter test and a good filter test. The filter tests can be stored as executable instructions on a computer readable memory associated with the system 906. A sensor barometer module 908 can access a sensor barometer 910, based on the results of the filter tests. The sensor barometer 910 can be a counter that has its value modified based on the current and past sensor readings. For example,in an exemplary embodiment, the counter can be incremented after every instance the process determines that the sensor data is reliable and decremented when the sensor data is determined to be unreliable.

Figure 9 provides the steps in determining whether sensor data is reliable. As previously discussed, the system may not require a validation of the sensor data, depending on the sensor type. An ultrasonic sensor may necessitate the data validation, but other types of sensors may not. As mentioned, the RL data may be run through filters embodied as machine executable instructions stored on a computer readable medium. The filters can include, but are not limited to: an empty filter 1002, a bad filter 1008, a misaligned filter 1014 and a good filter 1020. It is understood that the filters can be run in any order, and do not need to be run in the order described above. The filters may be based on extracting features from the RL data and applying rules based on the results.

The empty filter 1002 may be any filter that determines whether the sensor data is empty or substantially empty. For example, in one embodiment empty filter 1002 can process RL data to determine the amount of data samples having a value, i.e. a y-value, below a predetermined value, e.g. 2. If the percentage of data samples with a y-value that is less than the predetermined value is greater than a predetermined percentage threshold, e.g. 50%, the RL data may be considered empty in step 1004 and marked as empty is step 1006. After step 1006 the sensor barometer may be decremented in step 1026. If the RL data is not determined to be empty, the algorithm may continue to the bad filter 1008. The following is an example pseudo code algorithm that may be executed in the empty filter:

```
Start:
        total points = 0;
        empty points = 0;
        i=1;
        while (RLi != NULL)
                if(RLi ≤ predetermined_value)
                        empty points = empty points + 1;
                total points = total points + 1;
        if((empty points/total points) ≤ percentage threshold)
                RL = empty;
                sensor barometer = sensor barometer -2;
        else
                goto Bad Filter();
```

The bad filter 1008 can be any filter that determines whether the sensor data is unreliable. For example, an exemplary bad filter 1008 detects whether the hourly RL data is in a near-straight line state. A near-straight line state can be thought of as a state when a curve representing the hourly RL data is in a straight-line shape or nearly a straight-line shape. The filter 1008 selects a starting point to asses a portion of the data. The filter 1008 designates the starting point either at the first point of the portion of the curve being analyzed or at the end point of the previous near-straight line. The starting point is stored and the next point on the curve is read from the table storing the measure RL data. If the difference between the y-value of the next point and the y-value of the first point is greater than a predetermined threshold, e.g. *e*=0.3, then the next point is the ending point of the current line. If the y-value difference is less than e, the scanning process is repeated until a y-value difference between a next point and the first point exceeds e for the ending point of the current line. For each near-straight line, the length and average y-value average of the line may be calculated. If the length of the near-straight line is greater than a length threshold, e.g. *a*=20, and the average y-value is greater than a average value threshold, e.g. *b*=10, then the near-straight line may be classified as a qualified line. If the number of qualified lines in a data set exceeds a cumulative lines threshold, e.g. *c*=3, or if the number of points involved in all of the qualified lines exceeds a cumulative length threshold, e.g. *d*=60, then the data represented by the curve is classified as unreliable. If the RL data is unreliable in step 1010 the data is marked as unreliable in step 1012 and the sensor barometer is decremented in step 1026. If the RL data is not unreliable, the algorithm continues to the misaligned filter 1014. The following is an example pseudo code algorithm that may be run in Bad Filter 1008.

```
Start:
    i=2;
    start=1
    qualified lines = 0;
    cumulative length = 0;
    For all data points in the curve RL:
        RLtot= RLstart
        length = 0;
        While (|RLstart-RLi| < e)
            length = length + 1;
            i = i + 1;;
            RLtot= RLtot + RLi;
        if (length ≥ 20 && (((RLtot/(i-start)) > b)
            increment qualified lines;
            cumulative length = cumulative length +length;
        start = i;
        i = i + 1;
    if(qualified length ≥ c OR cumulative length ≥ d)
        curve RL = bad;
        sensor barometer = sensor barometer - 2;
    else
        goto Misaligned Filter()
```

The Misaligned Filter 1014 may be any filter that determines whether the sensor is misaligned. For example, an exemplary Misaligned Filter 1014 addresses six cases that can lead to the conclusion that the filter is misaligned.

A first case may analyze the RL data to determine whether the curve has too much variation of RL values, i.e. y-values, from point to point. An absolute difference value between y-values may be calculated for each pair of adjacent data points. For example, the following may be used:

$$DV_{i,i+1} = \left| RL_i - RL_{i+1} \right|$$

An average of the calculated absolute difference values may then be calculated, using, for example:

$$DV_{avg} = \frac{DV_{1,2} + DV_{2,3} + \ldots + DV_{i,i+1} + \ldots DV_{n-1,n}}{n}$$

where $DV_{avg}$ is the average difference value and $DV_{i,i+1}$ is the absolute difference between the RL value of *i*th reading and the (i+*1*)th reading, and where there are *n* total readings. Each calculated absolute difference value is then compared against the sum of the average absolute difference value and a predetermined value, e.g. *k=15,* and a counter may be incremented for every instance where the absolute difference value exceeds the average absolute difference value. The process will then determine if the amount of difference values exceeding the sum of the average difference value and the predetermined value is too high. One way to determine if this condition exists is to multiply the amount of data points, *n*, by a second predetermined value, e.g. *b*=.2. The following represents pseudo code for one possible implementation of the foregoing case:

```
Start
  CASE 1:
        Calculate all DVs;
        Calculate DV_avg;
        For(all DV values)
                IF(DV_i,i+1 ≥ DV_avg + k)
                        increment counter;
        if(counter ≥ n*b) →
                curve = maligned;
                sensor barometer decremented;

        else
                goto case 2;
```

In a second case, the misaligned filter 1014 examines whether a percentage of points having a y-value below a threshold, e.g. 2 is greater than a percentage threshold, e.g. 55%. If so, the curve is misaligned. If not, the filter steps to the next case.

In a third case, the exemplary misaligned filter 1014 determines if a certain percentage of points fall within qualified lines. The determination is similar to that of the bad filter 1008, but the parameters can be adjusted, and the behavior of the curve constituting a misaligned curve is slightly different. The third case of the misaligned filter 1014 labels a segment of data points as a qualified line if the length is greater than a short qualified line threshold, e.g. 5. The third case will then calculate the number of data points falling in qualified lines versus the total number of data points in the data curve. If the percentage of points falling in qualified lines is greater than a percentage threshold, e.g. 55%, then the curve is labeled as misaligned.

In a fourth case, the misaligned filter 1014 examines pit vectors extrapolated from the original data curve. Once the pit vector is extrapolated/generated from the original data curve, the points of the pit vector are analyzed with respect to neighboring points on the pit vector. A similar analysis to the third filter is made, such that the misaligned filter 1014 will determine how many points in the pit vector fall within qualified lines. If the amount of points in the pit vector falling within qualified lines versus the amount of points in the pit vector exceeds a pit vector percentage threshold, e.g. 40%, then the data curve is labeled as misaligned. It is envisioned that the length of a qualified length in the fourth case does not need to be equal to the length of the qualified line in the third case. For example, in the third case a qualified line was characterized as having a length of five points, the fourth case may label a qualified line in the pit vector as spanning four points.

In a fifth case, the misaligned filter 1014 examines the peak vector extrapolated from the original data curve. The steps undertaken in analyzing the peak vector are essentially the same as the steps taken to analyze the pit vector. Namely, the misaligned filter 1014 will extrapolate/generate a peak vector from the data curve. Once the peak vector is extrapolated/generated from the original data curve, the points of the peak vector are analyzed with respect to neighboring points on the peak vector. A similar analysis to the third and fourth filters is made, such that the misaligned filter 1014 will determine how many points in the peak vector fall within qualified lines. If the amount of points in the peak vector falling within qualified lines versus the amount of points in the peak vector exceeds a peak vector percentage threshold, e.g. 50%, then the data curve is labeled as misaligned. It is envisioned that the length of a qualified length in the fifth case does not need to be equal to the length of the qualified line in the third case or the fourth case. For example, in the third case a qualified line was characterized as having a length of five points and in the fourth case the qualified line length was four points. In the fifth case, a qualified line may have a length of three points.

In the sixth case, the distribution of the points in the data curve is analyzed. The sixth case of the exemplary misaligned filter 1014 determines if too many of the data points are within a small range, thereby indicating misaligned data. The misaligned filter 1014 will separate the data curve into segments of equal length, e.g. three units per segment, referred to as ranges. The misaligned filter 1014 will then calculate the number of points falling within each range. The range having the greatest amount of points is labeled as *LRange.* A point counter will be set to the number of points falling in *LRange* and a range counter will be set to one. The misaligned filter 1014 will then analyze the ranges with respect to each other.

The following will run iteratively until the point counter is greater than or equal to 60% of the amount of total points in the curve or until there are no more ranges to analyze. The misaligned filter will compare *LRange* with the next most populated range, labeled as *NRange.* If the amount of points in *NRange* is equal to or greater than 20% of the amount of points in *LRange* then the point counter will be incremented by the amount of points in *NRange* and the range counter is incremented. Else, neither counter is incremented. *LRange* is then set equal to *NRange,* and *NRange* is the next most populated range. This loop will iterate until there are no more ranges to analyze or the point counter is greater than or equal to 60% of the amount of total points in the curve.

After exiting the loop, the misaligned filter will check i) whether the point counter is greater than or equal to 60% of the amount of total points in the curve and ii) whether the value of the range counter is greater than or equal to a range threshold, e.g. 2. If both i) and ii) are false, then the misaligned filter 1014 classifies the data as misaligned and unreliable. The sensor barometer can also be decremented.

If the Misaligned Filter 1014 finds that the sensor is misaligned, at step 1016 the Misaligned Filter 1014 may indicate that the sensor is misaligned and the RL data curve may be marked as misaligned in step 1018. If not, the sequence may continue to the Good Filter 1020. If the Good Filter 1020 finds that the RL data is good step 1022 may indicate that the data is good and the RL data curve may be marked as good in step 1024. If the data is not good step 1022 may indicate that the data is not good and the RL data curve may be marked as unknown in step 1024.

In some embodiments a sensor barometer 908 may be used as a means to determine the reliability of the sensor data. If the reading on the sensor barometer 308 exceeds a predetermined threshold, the data is determined to be reliable, else the data is considered unreliable. As described above, when one of the data filters determines a status of the data curve, the counter may be incremented or decremented based on the status. If after filtering, the data is determined to be reliable, and step 1030 is reached, the barometer may be incremented by an integer value such as 1. If the filters determine that the data is empty, bad, or misaligned, and step 1026 is reached, the barometer may be decremented by an integer value such as 2. The sensor barometer can be initially set to a predetermined value such as 4 and has a maximum value such as 8. The barometer may be used to indicate that the data has reached a warning limit, e.g. 4, or that an alarm limit has been reached, e.g. 1. With these example predetermined values, two straight days of decrementing may result in a warning and 4 straight days may always result in an alarm. When the barometer is incremented in step 1030, the next step may check whether the barometer is in a warning state. If so, the return value as to whether the data should be used may be set to not OK in step 1036. Only after a sufficient number of good sensor readings have been received, so as to remove the warning state label from the data, will the return value be set to OK in step 1034. When the barometer is decremented the return value may be set to not OK in step 1036. In step 1038 it may be determined whether the barometer is in an alarm state. If so, an alarm notification is generated in step 1040.

The following explains exemplary components and methods for selecting and creating models. Previously measured data may be used as training data to create the data models. The training may be supervised or unsupervised.

Referring now to Figures 10 and 11, model selection of an existing model from the model database 305 is depicted. In Figure 10, data to be analyzed 1102, including $RL_{HR}$, $T_{aHR}$, $T_{dHR}$, and $P_{dHR}$, can be received or accessed from measured data database 303 by existing model module 1104. Model data 1106 can be accessed from the model database 305by existing model module 1104 and can include existing model data and existing model hypercube boundary data. The hypercube boundary data is compared with the measured system data by existing model module 1104 to determine if the corresponding model is a match. The existing model module 1106 may use the data to be analyzed 1102, e.g. the measured data, and model data 1106 to create the output of a selected model 1108. The output of a selected model is the expected refrigerant level, $RL_M$. $RL_M$ may be compared with the $RL_{HR}$ data by the SPC module, described above, to determine a leak status.

Referring to Figure 11, the steps depict a method for selecting an existing model using data corresponding to a particular day. At step 1202 an existing model can be accessed. Each model may have a defined hypercube boundary for comparison with the day's hourly data $RL_{HR}$, $T_{aHR}$, $T_{dHR}$, and $P_{dHR}$. The hypercube may define the limits for $T_{aHR}$, $T_{dHR}$, and $P_{dHR}$, so that an appropriate model can be selected. For example, the hypercube can include data representing $T_{aHIGH}$, $T_{dHIGH}$, and $P_{dHIGH}$ and $T_{aLOW}$, $T_{dLOW}$, and $P_{dLOW}$. At step 1204 the system may calculate the percentage of the hourly data, $T_{aHR}$, $T_{dHR}$, and $P_{dHR}$, that falls within the hypercube boundary of the selected existing model. At step 1206, the system may determine whether the percentage of the hourly data falling within the hypercube boundary is greater than a predetermined percentage, e.g. 80%. If the percentage of hourly data falling within the hypercube boundary does not exceed the predetermined threshold, at step 1210 weather there are more existing models to be selected is determined, and if there are more models to be selected, step 1212 may move to the next model. This may continue until all models are tested, i.e. step 1210=no, or a valid model is found, i.e. step 1206=yes. When a valid model is found, the valid model may be set to the selected existing model at step 1208. At step 1214, the system determines whether an existing model has been selected. If so, the model selection process is complete. Else, the steps depicted in Figure 13 may be executed by the components of Figure 12 to select a model for each set of data.

Figures 12 and 13 illustrate the components and method used to generate a model, respectively. As discussed, a model will be generated when no preexisting models exist that are reliable given the measured system data and the hypercube data of the plurality of data models.

In Figure 12, a model configuration module 1308 is in communication with a model barometer module 1312 and a data creation module 1306. The data creation module 1306 receives the data to be analyzed and the previously recorded data and updates the training data by appending the data to be analyzed recorded data to the model data. Using the updated data, i.e. the previously recorded data and the data to be analyzed, a new model is created by model configuration module 1308. Model configuration module 1306 accesses various machine learning procedures embodied as computer executable instructions on the computer readable medium. The output of model configuration module 1308 is a new model. A model barometer may be incremented every time a valid model is used and decremented every time a invalid model is created. When the model barometer reaches a predetermined model barometer threshold, the model barometer module 1312 will determine that the models have too much variance and generate a notification. Greater detail on model creation is provided below.

Figure 13 illustrates an exemplary process that may be executed by the leak detection system to create a new model. At step 1416, the measured data for the day to append is set to be analyzed. At step 1418, the process checks whether the day index of the data to be amended is a valid data set, and if not, the system steps to step 1426. If the day index is valid, the process steps to step 1420, which determines the amount of RL entries in the model creation data. In an exemplary embodiment, 3 days data, or 72 hours of data, may be used to create a model. At step 1420, the process checks whether the number of non-NULL entries in the model creation data is less than 72 (or 3 days of entries), if not, the process steps to step 1426. If the model creation data has less than 72 hours worth of data, then the current date's data, including $T_{aHR}$, $T_{dHR}$, and $P_{dHR}$ is amended to the model creation data. The index counter is incremented at step 1424. This portion of the process repeats until there is either more than 72 valid RL entries in the model creation data, or until there is no more valid data to be appended. At step 1426, the process determines whether there is enough data to create a model. If there is not enough data, the process ends and no model is created. If there is enough data, however, the process steps to step 1428, at which time a new model is created using, for instance, an hour compensated linear regression. The output is a new model.

The new model is then validated at step 1430. If the model is valid, then it is set to the selected model at 1432, stored in the model database 305 at 1442, and the model barometer is incremented. If the model is not valid, the model barometer is decremented at 1436. The model barometer is then read to determine if it is in an alarm state, i.e. is the barometer reading less than the predetermined model barometer threshold. If the model barometer is in an alarm state, then too much variance in the data is assumed. Greater detail on the actual creation of the model is provided below.

Figures 14 and 15 illustrate the components and method used to build a model. This approach of modeling system behavior assumes a programmed defrost schedule in a commercial refrigeration system. Other approaches may be used depending on the type of refrigeration system, e.g. hour compensation may not be necessary if the type of refrigeration system does not include a defrost schedule. An hour effect may be learned which is a proxy for the changing load profile. It is also be possible to calculate the load with more sensors via a mass and energy balance. If the load is calculated, the load from the current hour and previous hour could be used with $T_{aHR}$, $T_{dHR}$, $P_{dHR}$ with a variety of learning machines such as linear regression, neural networks, M5 trees and similar methods. Although this invention generally uses units of hours, it should be recognized that the steps described or depicted could use different time intervals. It should be recognized that a number of classifiers such as the linear regression learning machines used here could have been applied. It should also be recognized that a variety of clustering algorithms such as K-means clustering could be applied.

In figure 14 an hour compensated linear regression machine module 1504 may access model creation data 1502 including $RL_{HR}$, $T_{aHR}$, $T_{dHR}$, and $P_{dHR}$ data from a computer-readable medium. Data transformation procedures data store 1506 may include, but is not limited to multiple linear regression, K-means clustering and hour effect algorithms, which can be accessed from a computer-readable medium also. The hour compensated linear regression learning machine module 1504 can output new model data 1508 including the new model and new model boundaries.

Figure 15 illustrates the steps taken to create a model. Generally speaking, the steps include running a classification algorithm on the training data, e.g. previously recorded data in step, at 1602, an error table is built using the results of the classification at 1604, a clustering algorithm is run on the training data at 1606, the effect of the time of the day is determined at 1608, and a second classification algorithm is run at 1610, the second classification algorithm takes into account the time of the day. These steps results in a learning machine capable of learning the effect of the day.

In an exemplary embodiment, the model creation data is analyzed by a multiple linear regression learning machine at 1602. The multiple linear regression learning machine performs a linear regression using the measured RL data and measured system data. An exemplary linear regression attempts to choose the optimal weights for expressing the output value. Thus, in the present application, a linear regression can be used to find the optimal weights such that RL is expressed as a linear combination of $T_{aHH}$, $T_{dHR}$, and $P_{dHR}$. Thus, the RL can be written in the following format:

$$RL = w_0 + w_1a_1 + w_2a_2 + w_3a_3 \quad (3)$$

where a1 is $T_{aHR}$, a2 is $T_{dHR}$, and a3 is $P_{dHR}$. The previously collected data, i.e., training data is used to optimize the weight selection. Each instance of data, i.e. the RL data and system data pertaining to a particular hour, is represented according to equation (3). Thus, the first instance may be represented as:

$$RL^1 = w_0 + w_1 a_1^1 + w_2 a_2^1 + w_3 a_3^1 \quad (4)$$

or

$$\sum_{j=0}^{3}\left(w_j a_j^1\right) \quad (5)$$

where $a_0$ is equal to 1. The expression above is an expression that can be used to predict the level of refrigerant, given the system data. The difference between the predicted values and the actual values of the refrigerant level may be used to optimize the selection of the weights. The goal of the regression is to minimize the error for the entire set of training data. Thus, if there are n instances in the training data, the sum of the squares of the differences may be represented by the following expression:

$$\sum_{i=0}^{n}\left(x^i - \sum_{j=0}^{3} w_j a_j^i\right)^2 \quad (6)$$

where i is the instance and x is the actual refrigerant level for that instance. By selecting the coefficients $w_0 \ldots w_k$ that minimize the error, a model can be defined to best predict the refrigerant level. It is envisioned that other regression techniques may be performed. Further, it is envisioned that other types of classification algorithms may be used in place of a regression. The foregoing was provided as an example of a linear regression.

At step 1604, an error table is built using the results of the regression, i.e. the model, and the measured RL data and the system data. For each hour, the system data is run through the model to determine an expected refrigerant level, i.e. $RL_M$. For each hour, the error table may be populated with the refrigerant level error, i.e. $RL_M - RL_{dHR}$. Thus, the end result may be an error table with 25 columns and 24 rows, one column for each hour of the day, where each row corresponds to a different hour. For example, The 25th column is the data for a particular day. The 25th column may include an error amount for the hour corresponding to the row. Further, the error values may be normalized between -1 and 1. The following is an example of two rows of an error table:

| | A | B | C | D | E | F | G | H | I | J | K | L | M | N | O | P | Q | R | S | T | U | V | W | X | Y |
|---|---|---|---|---|---|---|---|---|---|---|---|---|---|---|---|---|---|---|---|---|---|---|---|---|---|
| 1 | hour0 | hour1 | hour2 | hour3 | hour4 | hour5 | hour6 | hour7 | hour8 | hour9 | hour10 | hour11 | hour12 | hour13 | hour14 | hour15 | hour16 | hour17 | hour18 | hour19 | hour20 | hour21 | hour22 | hour23 | Error |
| 2 | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0.25 |
| 3 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | -0.25 |
| 4 | | | | | | | | | | | | | | | | | | | | | | | | | |

As can be seen from the table, at hour 1, a normalized error of .25 was measured and at hour 2 a normalized error of -.25 was measured. By representing the table in the following format, the Euclidean distance between each hour of the day is equal.

At step 1606, a clustering algorithm may be run on the table of error values. In some embodiments, the clustering algorithm is a k-means clustering. The first step in clustering is defining how many clusters are being sought, i.e. k. Although not required, 4-8 clusters may be used. Next, k points may be chosen at random as cluster centers. Then for each instance, the Euclidean distance from each cluster center may be calculated, and each instance is assigned to the cluster that it is closest to. Once all of the points are assigned to a cluster, a new center is chosen, and the data is run clustered again. This step may repeat until there are two consecutive rounds where the all or substantially of the data instances are assigned to the same cluster.

Applying this concept to the current task, each hour may have a distribution of errors associated therewith. The k-means clustering algorithm may cluster the samples, i.e. the hours, by their associated error distributions. The result of this cluster is a map where the keys are the hours and the entries corresponding to the keys are arrays that have a sum of the distributions for the hour and the cluster that the hour belongs to. Then for each hour of the day, a vector is constructed which contains the average distribution for the cluster at that hour of the day. Next, an hour list can be built based on the cluster that the hour belongs to. Thus, each hour is assigned to its nearest cluster based on the average distributions of the hour. The results of the second clustering is a second map that has the k clusters as keys, and the entries of the map are the hours of the day that belong to the corresponding cluster. Thus, if there are seven clusters, the first clusters may have, for example, hours 1, 4 and 11 belonging thereto. Thus, at the end of the clustering, each hour of the day will belong to one of the k clusters. The clusters are based on the error distributions corresponding to the hour of the day.

At step 1608, the effect of the hour of the day will be determined based on the results of the clustering. For each cluster, the error distributions of the hour corresponding to the cluster are analyzed. For each cluster, all of the calculated errors are averaged. Thus, from the example above, the errors for hours 1, 4 and 11 may be averaged together. Next, a new map is built that is an hour effect map. The keys of the map are the clusters and the entries corresponding to the keys are the average error of the refrigerant level for the corresponding cluster. The error average for each cluster can then be normalized. From the resulting normalized map, an hour effect table may be built. The hour effect table is indexed by the hour of the day, and the value corresponding to the hour of the day is the normalized error effect for that particular hour, which corresponds to the cluster to which the hour of the day belongs. The following is an example of a portion of the hour effect table, keeping in mind that hours 1 and 4 belong to the same cluster:

| Hour | Effect |
|---|---|
| 01 | -.3 |
| 02 | .4 |
| 03 | .2 |
| 04 | -.3 |

The error effect table can be used in the hour compensated linear regression, which is performed at step 1610. In the regression, the model creation data for each hour may be treated as an instance. Referring back to equation (3), the hour of the day effect can be incorporated into the linear combination. Thus, the expected RL readings may be expressed as:

$$RL = w_0 + w_1a_1 + w_2a_2 + w_3a_3 + w_4a_4$$

where $a_4$ is the hour effect for a particular hour and $w_4$ is the weight of the error effect. Similar to as was described above, the expected RL may be expressed as:

$$\sum_{j=0}^{4}\left(w_j a_j^1\right)$$

The expression above is an expression that can be used to predict the level of refrigerant, given the system data and the hour of the day effect. The difference between the predicted values and the actual values of the refrigerant level may be used to optimize the selection of the weights. Thus, if there are n instances in the training data, the sum of the squares of the differences may be represented by the following expression:

$$\sum_{i=0}^{n}\left(x^i - \sum_{j=0}^{4} w_j a_j^i\right)^2$$

where i is the instance and x is the actual refrigerant level for that instance. By selecting the coefficients $w_0 \ldots w_k$ that minimize the error, a model can be defined to best predict the refrigerant level. It is envisioned that other regression techniques may be performed that take into account the additional hour of the day effect. The result of the regression is an hour compensated data model.

At step 1612 the boundaries of a valid hypercube space for the model may be calculated. The various system data used to create the model are statistically analyzed to determine a mean and standard deviation. Thus, the hypercube boundaries may be defined as the narrower of the range and the mean plus or minus 3 standard deviations for each input feature $T_{aHR}$, $T_{dHR}$ and $P_{dHR}$. Once the hypercube boundaries are added to the model, the model creation may be complete.

Attached hereto as an appendix is a sample of source code used to perform model creation.

As used herein, the term module may refer to, be part of, or include an Application Specific Integrated Circuit (ASIC); an electronic circuit; a combinational logic circuit; a field programmable gate array (FPGA); a processor (shared, dedicated, or group) that executes code; other suitable components that provide the described functionality; or a combination of some or all of the above, such as in a system-on-chip. The term module may include memory (shared, dedicated, or group) that stores code executed by the processor.

The term code, as used above, may include software, firmware, and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The apparatuses and methods described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

## Claims

**1.** A system for detecting refrigerant leak in a refrigeration system (100) comprising:

a refrigerant level sensor configured to sense a level of refrigerant in the refrigeration system (100) and to generate refrigerant level data based on the level of refrigerant;
a plurality of system sensors (114, 118, 120) configured to sense conditions corresponding to the refrigeration system (100) and to generate sensed system data based on the sensed conditions, the sensed system data including at least one of ambient temperature data, condenser temperature data, and discharge pressure data;
said system being **characterized by**:

a model database (305) configured to store a plurality of models defining expected refrigerant levels based on previously recorded system data, wherein each of the models has an upper control limit and a lower control limit associated therewith;
a model selecting module (508) configured to select a model from the model database (305) based on the system data and the previously recorded system data;
a refrigerant level prediction module configured to generate an expected refrigerant level based on the sensed system data and the selected model; and
a notification module configured to generate a notification when a difference between the expected refrigerant level and the refrigerant level reading is one of greater than the upper control limit and less than the lower control limit of the selected model.

**2.** The system of claim 1, further comprising a model creation module configured to create a model based on the refrigerant level data and the sensed system data.

**3.** The system of claim 2, wherein the model created by the model creation module is further configured to be dependent on hours of the day at which the refrigerant level data and the sensed system data were sampled.

**4.** The system of claim 2, wherein the model creation module is configured to perform a linear regression to determine a linear combination of the sensed system data that estimates the refrigerant level.

**5.** The system of claim 4, configured such that the results of the linear regression are used to determine an error table having entries corresponding to a difference between the estimate of the refrigerant level and the refrigerant level data at a particular hour of the day;
optionally wherein the model creation module is configured to generate a table storing an hour effect indicating amount of effect an hour of the day has on the refrigerant level data for each hour of the day.

**6.** The system of claim 1, wherein the notification module is configured to generate a notification that refrigerant was added from the system when the difference between the expected refrigerant level and the refrigerant level reading is greater than the upper control limit in a predetermined number of consecutive readings.

**7.** The system of claim 1, wherein the notification module is configured to generate a notification that refrigerant is leaking from the system when the difference between the expected refrigerant level and the refrigerant level reading is less than the lower control limit in a predetermined number of consecutive readings.

**8.** A method for detecting refrigerant leak in a refrigeration system (100), said method comprising:

sensing a level of refrigerant in the refrigeration system (100);
generating refrigerant level data based on the level of refrigerant;
sensing conditions corresponding to the refrigeration system (100);
generating sensed system data based on the sensed conditions, wherein the sensed system data includes at least one of ambient temperature data, condenser temperature data, and discharger pressure data;
said method being **characterized by**:

storing, in a model database (305), a plurality of models that define expected refrigerant levels based on previously recorded system data, wherein each of the models has an upper control limit and a lower control limit associated therewith;
selecting a model from the model database (305) based on the system data and the previously recorded system data;
generating an expected refrigerant level based on the sensed system data and the selected model; and
generating a notification when a difference between the expected refrigerant level and the refrigerant level reading is one of greater than the upper control limit and less than the lower control limit of the selected model.

**9.** The method of claim 8, further comprising creating a model based on the refrigerant level data and the sensed system data.

**10.** The method of claim 9, wherein the created model is further dependent on hours of the day at which the refrigerant level data and the sensed system data were sampled.

**11.** The method of claim 9, further comprising performing a linear regression on the sensed system data and the refrigerant level data to determine a linear combination of the sensed system data that estimates the refrigerant level;
said method optionally further comprising determining an error table having entries corresponding to a difference between the estimate of the refrigerant level and the refrigerant level data at a particular hour of the day based on a result of the linear regression;
said method optionally further comprising generating a table storing an hour effect indicating an amount of effect an hour of a particular day has on the refrigerant level data for each hour of the particular day.

**12.** The method of claim 8, wherein the generated notification indicates that refrigerant was added to the refrigeration system (100) when the difference between the expected refrigerant level and the refrigerant level reading is greater than the upper control limit in a predetermined number of consecutive readings.

**13.** The method of claim 8, wherein the generated notification indicates that refrigerant is leaking from the system when the difference between the expected refrigerant level and the refrigerant level reading is less than the lower control limit in a predetermined number of consecutive readings.

**14.** The system of claim 1 or the method of claim 8, wherein the sensed system data includes the ambient temperature data, the condenser temperature data, and the discharge pressure reading.

**15.** The system of any one of claims 1 to 7 or 14, wherein each of the models further has at least one system data limit associated therewith, and wherein the model selecting module (508) is configured to compare the sensed system data with the at least one system data limit for each model in the plurality of models and the selection of the model from the model database (305) is further based on the comparison and the previously recorded system data.

**16.** The method of any one of claims 8 to 14, wherein each of the models further has at least one system data limit associated therewith, and wherein the model selecting module (508) compares the sensed system data with the at least one system data limit for each model in the plurality of models and selects the model from the model database (305) further based on the comparison and the previously recorded system data.

## Patentansprüche

1. System zum Erfassen eines Kühlmittellecks in einem Kühlsystem (100), umfassend:

   einen Kühlmittelstandsensor, der konfiguriert ist, um einen Stand von Kühlmittel in dem Kühlsystem (100) zu erfassen und auf Grundlage von dem Stand von Kühlmittel Kühlmittelstanddaten zu erzeugen;
   eine Vielzahl von Systemsensoren (114, 118, 120), die konfiguriert sind, um Bedingungen zu erfassen, die dem Kühlsystem (100) entsprechen und erfasste Systemdaten auf Grundlage von den erfassten Bedingungen zu erzeugen, wobei die erfassten Systemdaten mindestens eines von Umgebungstemperaturdaten, Kondensatortemperaturdaten und Ausgabedruckdaten beinhalten;
   wobei das System durch Folgendes gekennzeichnet ist:

   eine Modelldatenbank (305), die konfiguriert ist, um eine Vielzahl von Modellen zu speichern, die erwartete Kühlmittelstände auf Grundlage von vorher aufgezeichneten Systemdaten definieren, wobei jedes der Modelle eine obere Kontrollgrenze und eine untere Kontrollgrenze aufweist, die damit assoziiert sind;
   ein Modellauswahlmodul (508), das konfiguriert ist, um ein Modell auf Grundlage der Systemdaten und der vorher aufgezeichneten Systemdaten aus der Modelldatenbank (305) auszuwählen;
   ein Kühlmittelstand-Vorhersagemodul, das konfiguriert ist, um einen erwarteten Kühlmittelstand auf Grundlage der erfassten Systemdaten und des ausgewählten Modells zu erzeugen;
   ein Benachrichtigungsmodul, das konfiguriert ist, um eine Benachrichtigung zu erzeugen, wenn eine Differenz zwischen dem erwarteten Kühlmittelstand und der Kühlmittelstandmessung eines von größer als die obere Kontrollgrenze und weniger als die untere Kontrollgrenze des ausgewählten Modells ist.

2. System nach Anspruch 1, ferner umfassend ein Modellerstellungsmodul, das konfiguriert ist, um ein Modell auf Grundlage der Kühlmittelstanddaten und der erfassten Systemdaten zu erstellen.

3. System nach Anspruch 2, wobei das Modell, das von dem Modellerstellungsmodul erstellt wurde, ferner konfiguriert ist, um abhängig von Tageszeiten zu sein, zu denen die Kühlmittelstanddaten und die erfassten Systemdaten erhoben wurden.

4. System nach Anspruch 2, wobei das Modellerstellungsmodul konfiguriert ist, um eine lineare Regression auszuführen, um eine lineare Kombination der erfassten Systemdaten zu bestimmen, die den Kühlmittelstand schätzt.

5. System nach Anspruch 4, das so konfiguriert ist, dass die Ergebnisse der linearen Regression verwendet werden, um eine Fehlertabelle zu bestimmen, die Einträge aufweist, die einer Differenz zwischen der Schätzung des Kühlmittelstands und der Kühlmittelstanddaten zu einer bestimmten Tageszeit entsprechen;
   optional wobei das Modellerzeugungsmodul konfiguriert ist, um eine Tabelle zu erstellen, die eine Stundenauswirkung speichert, die eine Auswirkungsmenge angibt, die eine Tageszeit auf die Kühlmittelstanddaten für jede Tageszeit hat.

6. System nach Anspruch 1, wobei das Benachrichtigungsmodul konfiguriert ist, um eine Benachrichtigung zu erzeugen, dass Kühlmittel von dem System hinzugefügt wurde, wenn die Differenz zwischen dem erwarteten Kühlmittelstand und der Kühlmittelstandmessung in einer vorbestimmten Anzahl von aufeinander folgenden Messungen größer ist als die obere Kontrollgrenze.

7. System nach Anspruch 1, wobei das Benachrichtigungsmodul konfiguriert ist, um eine Benachrichtigung zu erzeugen, dass Kühlmittel aus dem System austritt, wenn die Differenz zwischen dem erwarteten Kühlmittelstand und der Kühlmittelstandmessung in einer vorbestimmten Anzahl von aufeinander folgenden Messungen weniger ist als die untere Kontrollgrenze.

8. Verfahren zum zum Erfassen eines Kühlmittellecks in einem Kühlsystem (100), wobei das Verfahren Folgendes umfasst:

   Erfassen eines Pegels von Kühlmittel in dem Kühlsystem (100);

Erzeugen von Kühlmittelstanddaten auf Grundlage des Stands von Kühlmittel;
Erfassen von Bedingungen, die dem Kühlsystem (100) entsprechen;
Erzeugen von erfassten Systemdaten auf Grundlage von erfassten Bedingungen, wobei die erfassten Systemdaten mindestens eines von Umgebungstemperaturdaten, Kondensatortemperaturdaten und Ausgabedruckdaten beinhalten;
wobei das Verfahren durch Folgendes gekennzeichnet ist:

Speichern, in einer Modelldatenbank (305), einer Vielzahl von Modellen, die erwartete Kühlmittelstände auf Grundlage von vorher aufgezeichneten Systemdaten definieren, wobei jedes der Modelle eine obere Kontrollgrenze und eine untere Kontrollgrenze aufweist, die damit assoziiert sind;
Auswählen eines Modells aus der Modelldatenbank (305) auf Grundlage der Systemdaten und der vorher aufgezeichneten Systemdaten;
Erzeugen eines erwarteten Kühlmittelstands auf Grundlage der erfassten Systemdaten und des ausgewählten Modells; und
Erzeugen einer Benachrichtigung, wenn eine Differenz zwischen dem erwarteten Kühlmittelstand und der Kühlmittelstandmessung eines von größer als die obere Kontrollgrenze und weniger geringer als die untere Kontrollgrenze des ausgewählten Modells ist.

**9.** Verfahren nach Anspruch 8, ferner umfassend ein Erstellen eines Modells auf Grundlage der Kühlmittelstanddaten und der erfassten Systemdaten.

**10.** Verfahren nach Anspruch 9, wobei das erstellte Modell ferner abhängig von Tageszeiten ist, zu denen die Kühlmittelstanddaten und die erfassten Systemdaten erhoben wurden.

**11.** Verfahren nach Anspruch 9, ferner umfassend ein Ausführen einer linearen Progression auf die erfassten Systemdaten und die Kühlmittelstanddaten, um eine lineare Kombination der erfassten Systemdaten zu bestimmen, die den Kühlmittelstand schätzen;
wobei das Verfahren optional ferner ein Bestimmen einer Fehlertabelle umfasst, die Einträge aufweist, die einer Differenz zwischen der Schätzung des Kühlmittelstands und den Kühlmittelstanddaten zu einer bestimmten Tageszeit, auf Grundlage von einem Ergebnis der linearen Regression, entsprechen;
wobei das Verfahren optional ferner ein Erzeugen einer Tabelle umfasst, die einen Stundeneffekt speichert, der auf eine Menge einer Auswirkung hinweist, die die Tageszeit auf die Kühlmittelstanddaten für jede Tageszeit des bestimmten Tags hat.

**12.** Verfahren nach Anspruch 8, wobei die erzeugte Benachrichtigung angibt, dass Kühlmittel zu dem Kühlsystem (100) zugeführt wurde, wenn die Differenz zwischen dem erwarteten Kühlmittelstand und der Kühlmittelstandmessung in einer vorbestimmten Anzahl von aufeinander folgenden Messungen größer ist als die obere Kontrollgrenze.

**13.** Verfahren nach Anspruch 8, wobei die erzeugte Benachrichtigung angibt, dass das Kühlmittel aus dem System austritt, wenn die Differenz zwischen dem erwarteten Kühlmittelstand und der Kühlmittelstandmessung in einer vorbestimmten Anzahl von aufeinander folgenden Messungen weniger ist als die untere Kontrollgrenze.

**14.** System nach Anspruch 1 oder das Verfahren nach Anspruch 8, wobei die erfassten Systemdaten die Umgebungstemperaturdaten, die Kondensatortemperaturdaten und die Ausgabedruckmessung beinhalten.

**15.** System nach einem der Ansprüche 1 bis 7 oder 14, wobei jedes der Modelle ferner mindestens eine Systemdatengrenze aufweist, die damit assoziiert ist und wobei das Modellauswahlmodul (508) konfiguriert ist, um die erfassten Systemdaten mit der mindestens einen Systemdatengrenze für jedes Modell in der Vielzahl von Modellen zu vergleichen, und die Auswahl des Modells aus der Modelldatenbank (305) ferner auf dem Vergleich und den vorher aufgezeichneten Systemdaten beruht.

**16.** Verfahren nach einem der Ansprüche 8 bis 14, wobei jedes der Modelle ferner mindestens eine Systemdatengrenze aufweist, die damit assoziiert ist, und wobei das Modellauswahlmodul (508) die erfassten Systemdaten mit der mindestens einen Systemdatengrenze für jedes Modell in der Vielzahl von Modellen vergleicht, und das Modell aus der Modelldatenbank (305) ferner beruhend auf dem Vergleich und den vorher aufgezeichneten Systemdaten auswählt.

## Revendications

1. Système de détection de fuite de frigorigène dans un système de réfrigération (100) comprenant :

   un détecteur de niveau de frigorigène conçu pour détecter un niveau de frigorigène dans le système de réfrigération (100) et pour générer des données de niveau de frigorigène en fonction du niveau de frigorigène ;
   une pluralité de détecteurs de système (114, 118, 120) conçus pour détecter des conditions correspondant au système de réfrigération (100) et pour générer des données système détectées en fonction des conditions détectées, les données système détectées comprenant des données de température ambiante, des données de température de condensateur et/ou des données de pression d'évacuation ;
   ledit système étant **caractérisé par** :

      une base de données de modèle (305) conçue pour stocker une pluralité de modèles définissant des niveaux de frigorigène attendus en fonction de données système précédemment enregistrées, chacun des modèles présentant une limite de contrôle supérieure et une limite de contrôle inférieure associée à ceux-là ;
      un module de sélection de modèle (508) conçu pour sélectionner un modèle à partir de la base de données de modèle (305) en fonction des données système et des données système précédemment enregistrées ;
      une module de prédiction de niveau de frigorigène conçu pour générer un niveau de frigorigène attendu en fonction des données système détectées et du modèle sélectionné ; et
      un module de notification conçu pour générer une notification lorsqu'une différence entre le niveau de frigorigène attendu et la lecture du niveau de frigorigène est supérieure à la limite de contrôle supérieure ou inférieure à la limite de contrôle inférieure du modèle sélectionné.

2. Système selon la revendication 1, comprenant en outre un module de création de modèle conçu pour créer un modèle en fonction des données de niveau de frigorigène et des données système détectées.

3. Système selon la revendication 2, dans lequel le modèle créé par le module de création de modèle est en outre conçu pour dépendre d'heures de la journée auxquelles les données de niveau de frigorigène et les données système détectées ont été échantillonnées.

4. Système selon la revendication 2, dans lequel le module de création de modèle est conçu pour effectuer une régression linéaire pour déterminer une combinaison linéaire des données système détectées qui estime le niveau de frigorigène.

5. Système selon la revendication 4, conçu de manière que les résultats de la régression linéaire sont utilisés pour déterminer un tableau d'erreurs comportant des entrées correspondant à une différence entre l'estimation du niveau de frigorigène et les données de niveau de frigorigène à une heure particulière de la journée ;
   le module de création de modèle étant éventuellement conçu pour générer un tableau stockant un effet heure indiquant une quantité de l'effet qu'une heure de la journée a sur les données de niveau de frigorigène pour chaque heure de la journée.

6. Système selon la revendication 1, dans lequel le module de notification est conçu pour générer une notification selon laquelle le frigorigène a été ajouté à partir du système lorsque la différence entre le niveau de frigorigène attendu et la lecture du niveau de frigorigène est supérieure à la limite de contrôle supérieure dans un nombre prédéterminé de lectures consécutives.

7. Système selon la revendication 1, dans lequel le module de notification est conçu pour générer une notification selon laquelle le frigorigène fuit du système lorsque la différence entre le niveau de frigorigène attendu et la lecture du niveau de frigorigène est inférieure à la limite de contrôle inférieure dans un nombre prédéterminé de lectures consécutives.

8. Procédé de détection d'une fuite de frigorigène dans un système de réfrigération (100), ledit procédé comprenant :

   la détection d'un niveau de frigorigène dans le système de réfrigération (100) ;
   la génération de données de niveau de frigorigène en fonction du niveau de frigorigène ;
   la détection de conditions correspondant au système de réfrigération (100) ;
   la génération de données système détectées en fonction des conditions détectées, les données système détectées comprenant des données de température ambiante, des données de température de condensateur et/ou des données de pression d'évacuation ;
ledit procédé étant **caractérisé par** :

le stockage, dans une base de données de modèle (305), d'une pluralité de modèles qui définissent des niveaux de frigorigène attendus en fonction de données système précédemment enregistrées, chacun des modèles présentant une limite de contrôle supérieure et une limite de contrôle inférieure associée à ceux-là ;
la sélection d'un modèle à partir de la base de données de modèle (305) en fonction des données système et des données système précédemment enregistrées ;
la génération d'un niveau de frigorigène attendu en fonction des données système détectées et du modèle sélectionné ; et
la génération d'une notification lorsqu'une différence entre le niveau de frigorigène attendu et la lecture du niveau de frigorigène est supérieure à la limite de contrôle supérieure ou inférieure à la limite de contrôle inférieure du modèle sélectionné.

**9.** Procédé selon la revendication 8, comprenant en outre la création d'un modèle en fonction des données de niveau de frigorigène et des données de système détectées.

**10.** Procédé selon la revendication 9, dans lequel le modèle créé dépend en outre d'heures de la journée auxquelles les données de niveau de frigorigène et les données système détectées ont été échantillonnées.

**11.** Procédé selon la revendication 9, comprenant en outre la réalisation d'une régression linéaire sur les données système détectées et les données de niveau de frigorigène pour déterminer une combinaison linéaire des données système détectées qui estime le niveau de frigorigène ;
ledit procédé comprenant éventuellement en outre la détermination d'un tableau d'erreurs comportant des entrées correspondant à une différence entre l'estimation du niveau de frigorigène et les données de niveau de frigorigène à une heure particulière de la journée en fonction d'un résultat de la régression linéaire ;
ledit procédé comprenant éventuellement en outre la génération d'un tableau stockant un effet heure indiquant une quantité de l'effet qu'une heure d'une journée particulière a sur les données de niveau de frigorigène pour chaque heure de la journée particulière.

**12.** Procédé selon la revendication 8, dans lequel la notification générée indique que le frigorigène a été ajouté au système de réfrigération (100) lorsque la différence entre le niveau de frigorigène attendu et la lecture du niveau de frigorigène est supérieure à la limite de contrôle supérieure dans un nombre prédéterminé de lectures consécutives.

**13.** Procédé selon la revendication 8, dans lequel la notification générée indique que le frigorigène fuit du système lorsque la différence entre le niveau de frigorigène attendu et la lecture du niveau de frigorigène est inférieure à la limite de contrôle inférieure dans un nombre prédéterminé de lectures consécutives.

**14.** Système selon la revendication 1 ou procédé selon la revendication 8, dans lequel les données système détectées comprennent les données de température ambiante, les données de température de condensateur et/ou la lecture de pression d'évacuation.

**15.** Système selon l'une quelconque des revendications 1 à 7 ou 14, dans lequel chacun des modèles présente en outre au moins une limite de données système associée à celui-ci, et dans lequel le module de sélection de modèle (508) est conçu pour comparer les données système détectées à l'au moins une limite de données système pour chaque modèle dans la pluralité de modèles et la sélection du modèle à partir de la base de données de modèle (305) est en outre fonction de la comparaison et des données système précédemment enregistrées.

**16.** Procédé selon l'une quelconque des revendications 8 à 14, dans lequel chacun des modèles présente en outre au moins une limite de données système associée à celui-ci, et dans lequel le module de sélection de modèle (508) compare les données système détectées à l'au moins une limite de données système pour chaque modèle dans la pluralité de modèles et sélectionne le modèle à partir de la base de données de modèle (305) en outre en fonction de la comparaison et des données système précédemment enregistrées.

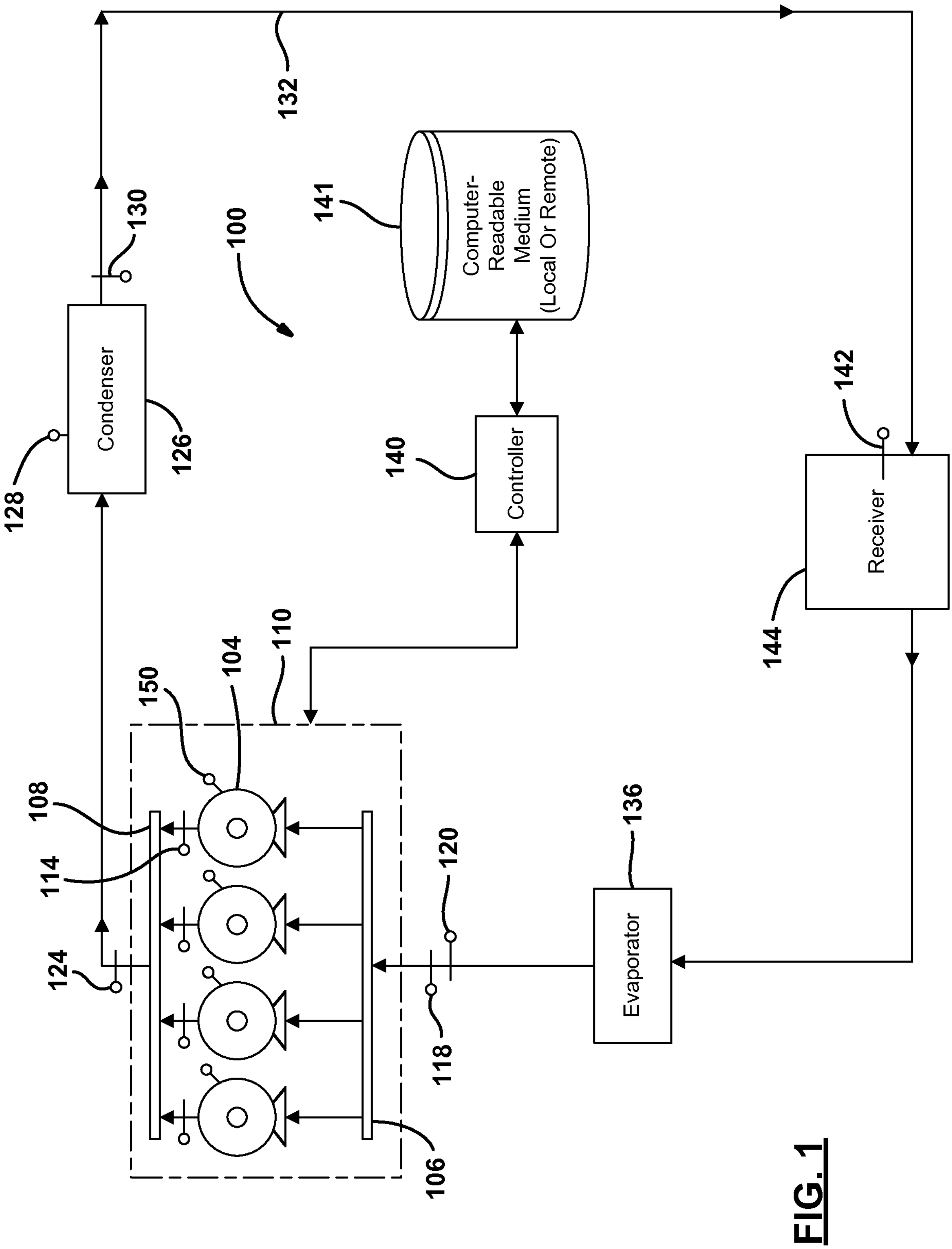
Condenser
Controller
Computer-
Readable
Medium
(Local Or Remote)
Receiver
Evaporator
100
104
106
108
110
114
118
120
124
126
128
130
132
136
140
141
142
144
150

FIG. 1

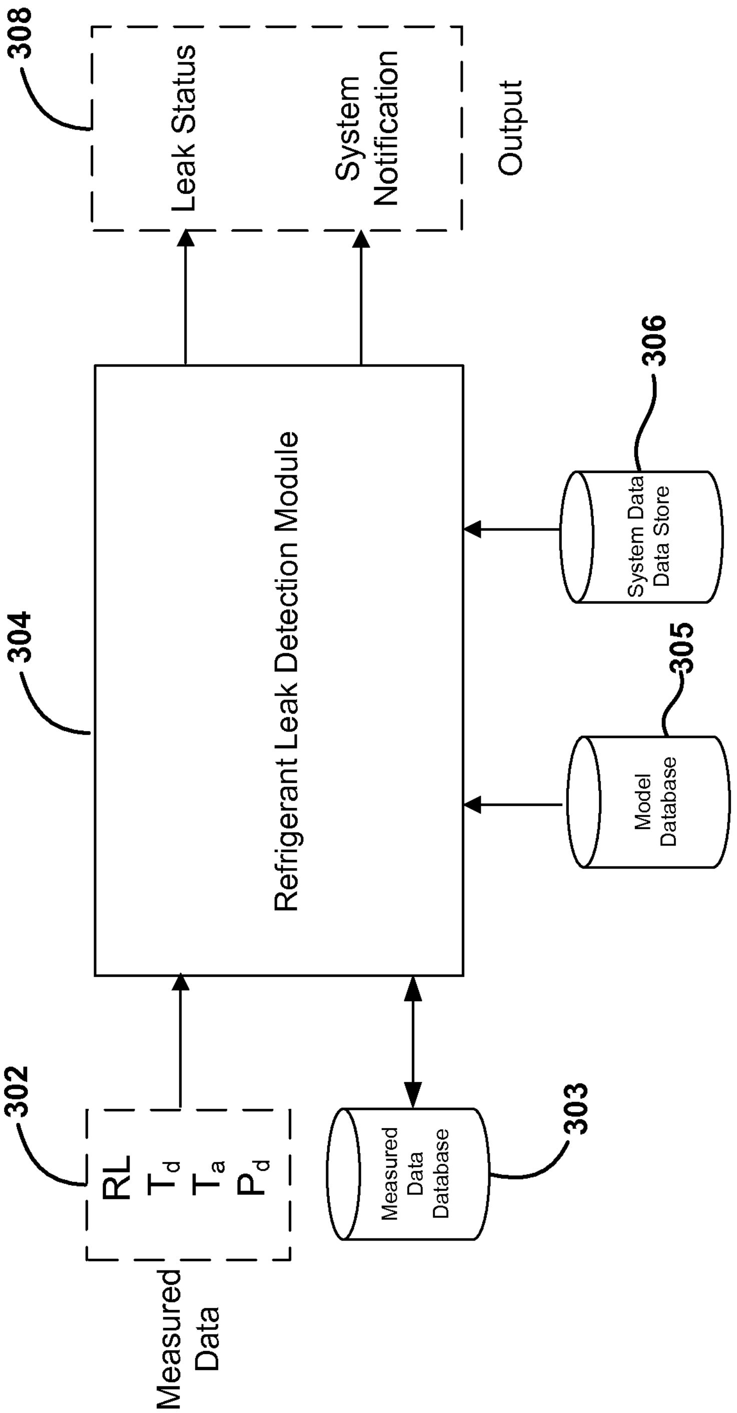
308
Leak Status
System Notification
Output
304
Refrigerant Leak Detection Module
306
System Data Data Store
305
Model Database
302
RL
$T_d$
$T_a$
$P_d$
Measured Data
303
Measured Data Database

FIG. 2

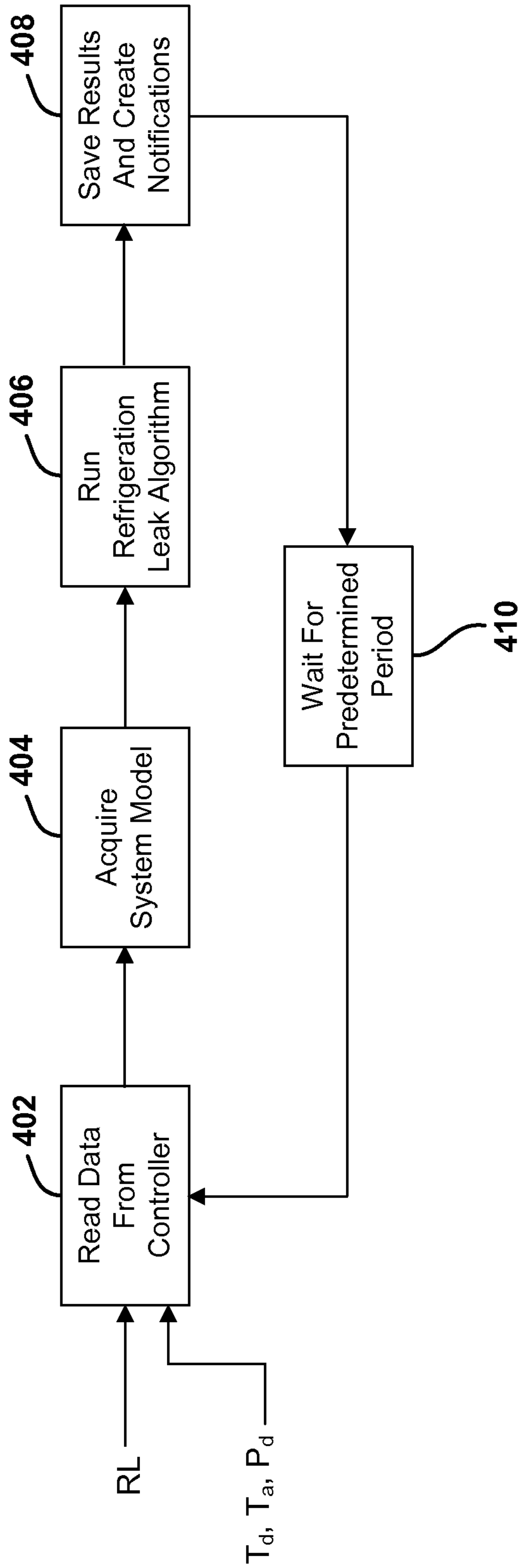
408
Save Results And Create Notifications
406
Run Refrigeration Leak Algorithm
404
Acquire System Model
402
Read Data From Controller
410
Wait For Predetermined Period
RL
$T_d$, $T_a$, $P_d$

FIG. 3

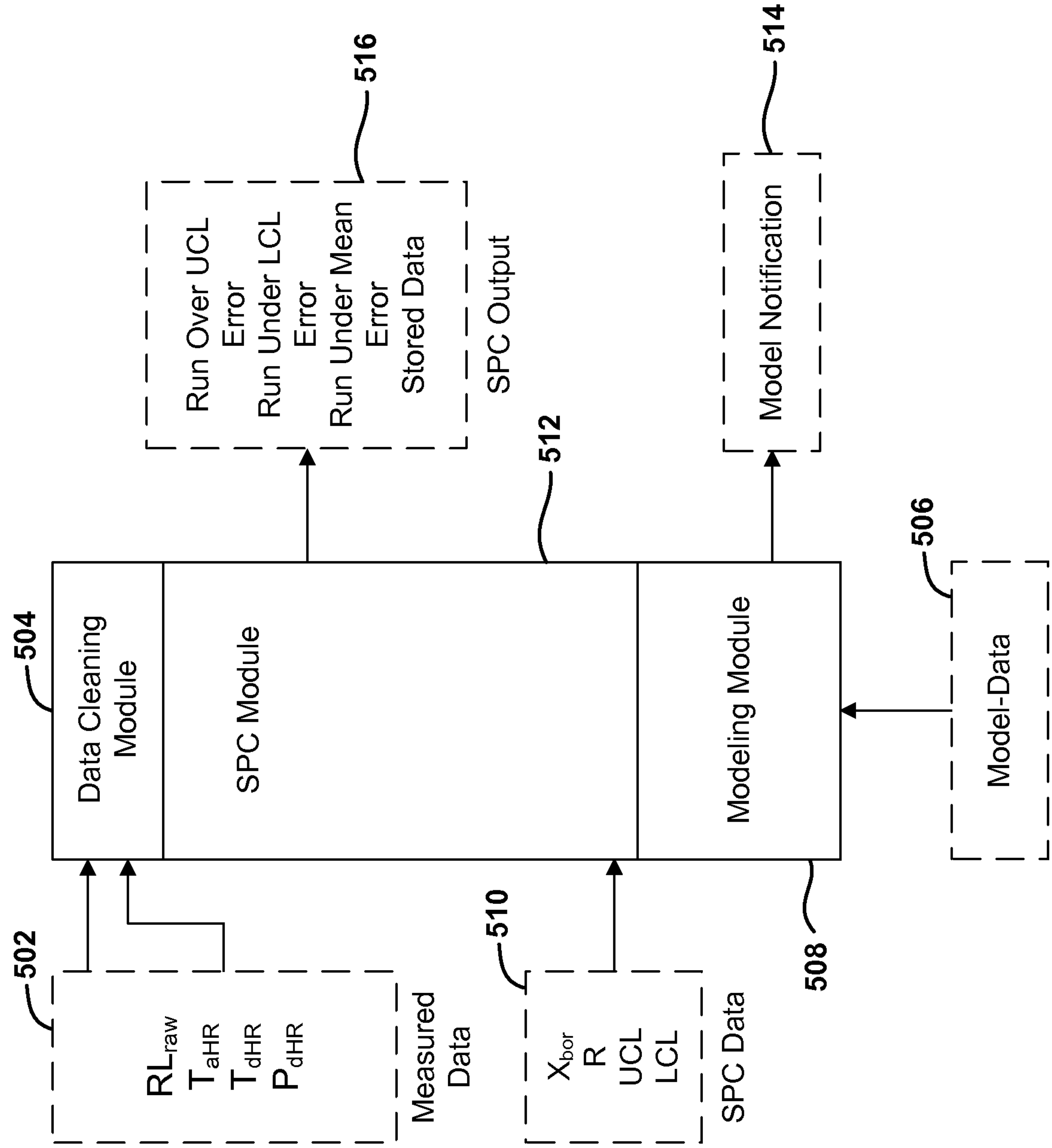

516
Run Over UCL Error
Run Under LCL Error
Run Under Mean Error
Stored Data
SPC Output
514
Model Notification
512
506
504
Data Cleaning Module
SPC Module
Modeling Module
Model-Data
502
RLraw
TaHR
TdHR
PdHR
Measured Data
510
Xbor
R
UCL
LCL
SPC Data
508


FIG. 4

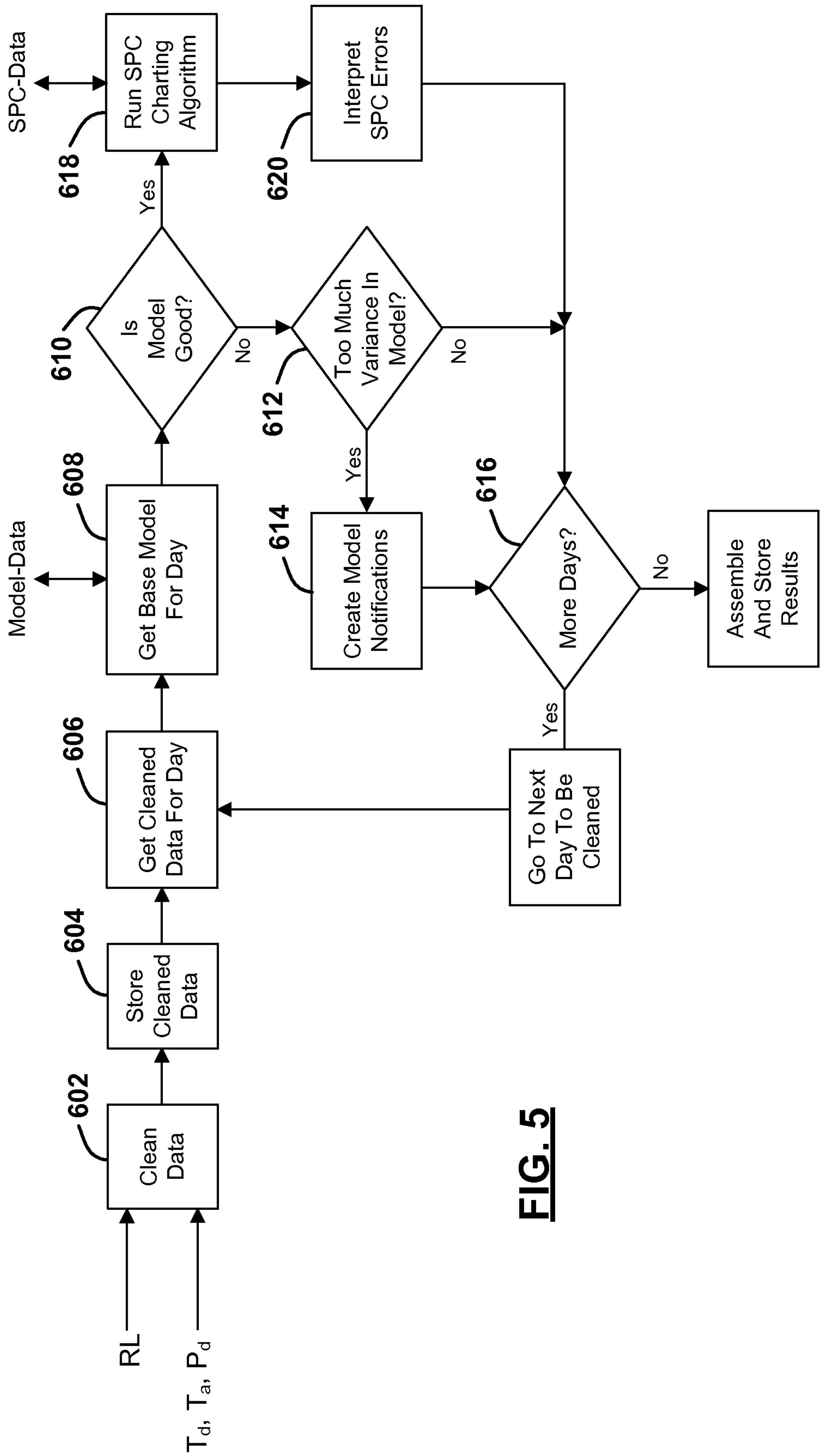
RL
$T_d$, $T_a$, $P_d$
602
Clean Data
604
Store Cleaned Data
606
Get Cleaned Data For Day
608
Get Base Model For Day
Model-Data
610
Is Model Good?
Yes
No
618
Run SPC Charting Algorithm
SPC-Data
612
Too Much Variance In Model?
Yes
No
614
Create Model Notifications
620
Interpret SPC Errors
616
More Days?
Yes
No
Go To Next Day To Be Cleaned
Assemble And Store Results

FIG. 5

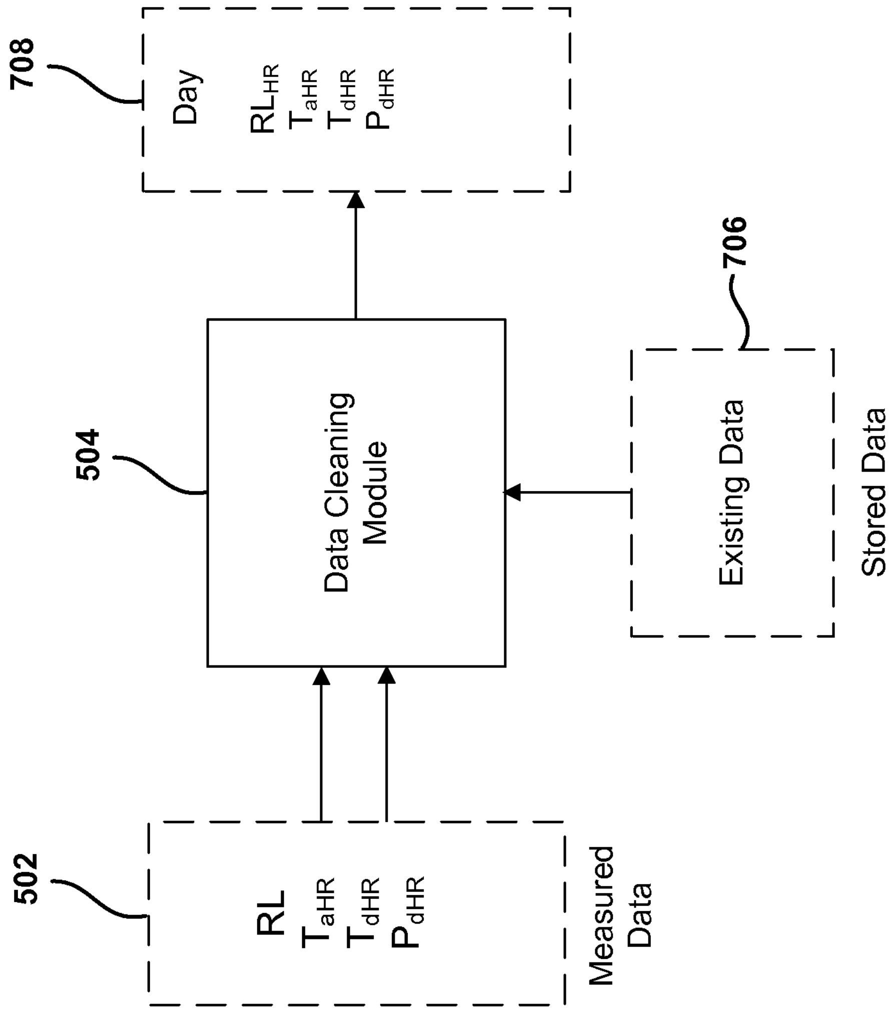
708
Day
$RL_{HR}$
$T_{aHR}$
$T_{dHR}$
$P_{dHR}$
504
Data Cleaning Module
706
Existing Data
Stored Data
502
RL
$T_{aHR}$
$T_{dHR}$
$P_{dHR}$
Measured Data

FIG. 6

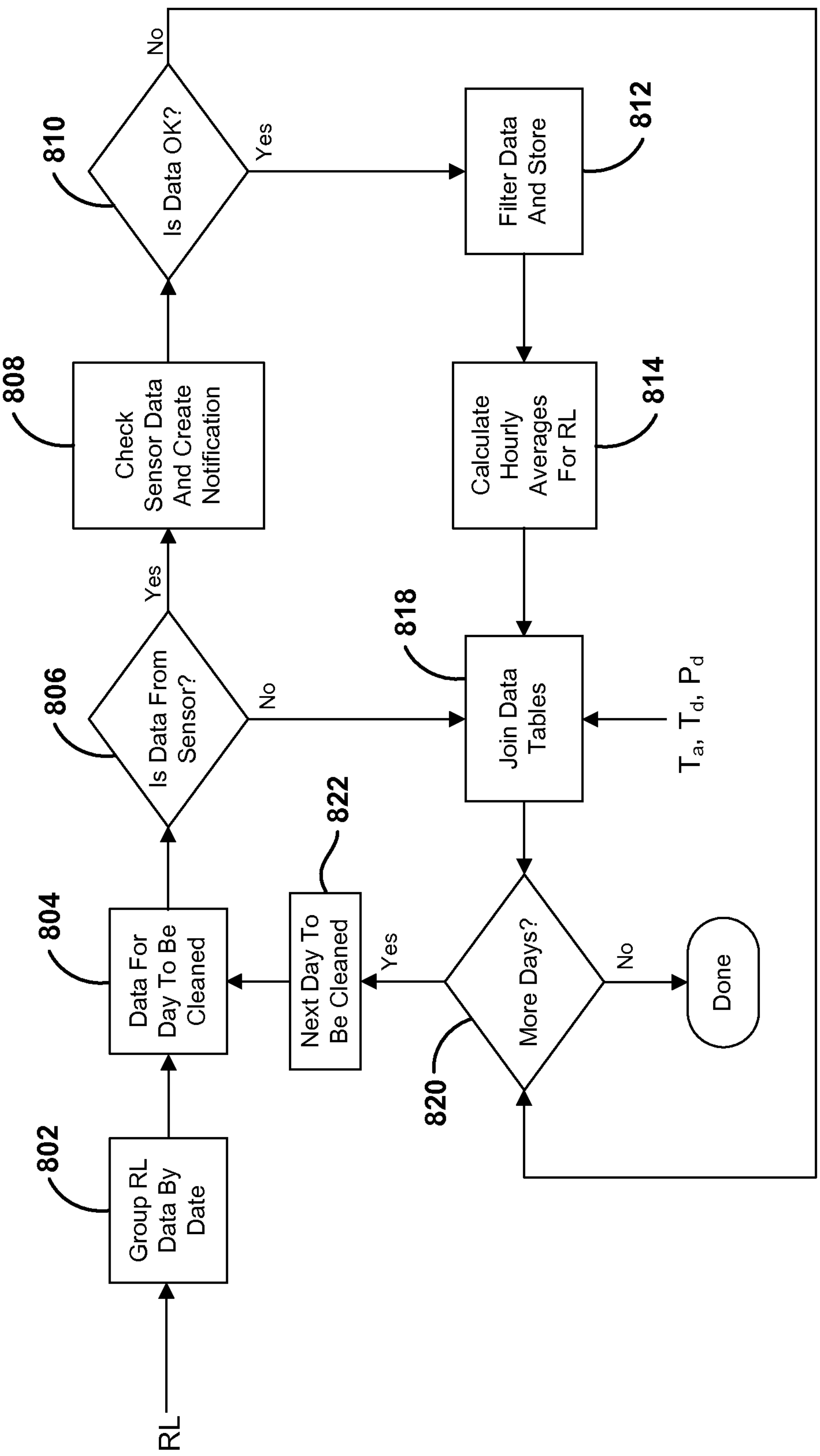
RL
802
Group RL Data By Date
804
Data For Day To Be Cleaned
806
Is Data From Sensor?
Yes
No
808
Check Sensor Data And Create Notification
810
Is Data OK?
Yes
No
812
Filter Data And Store
814
Calculate Hourly Averages For RL
818
Join Data Tables
$T_a$, $T_d$, $P_d$
820
More Days?
Yes
No
822
Next Day To Be Cleaned
Done

FIG. 7

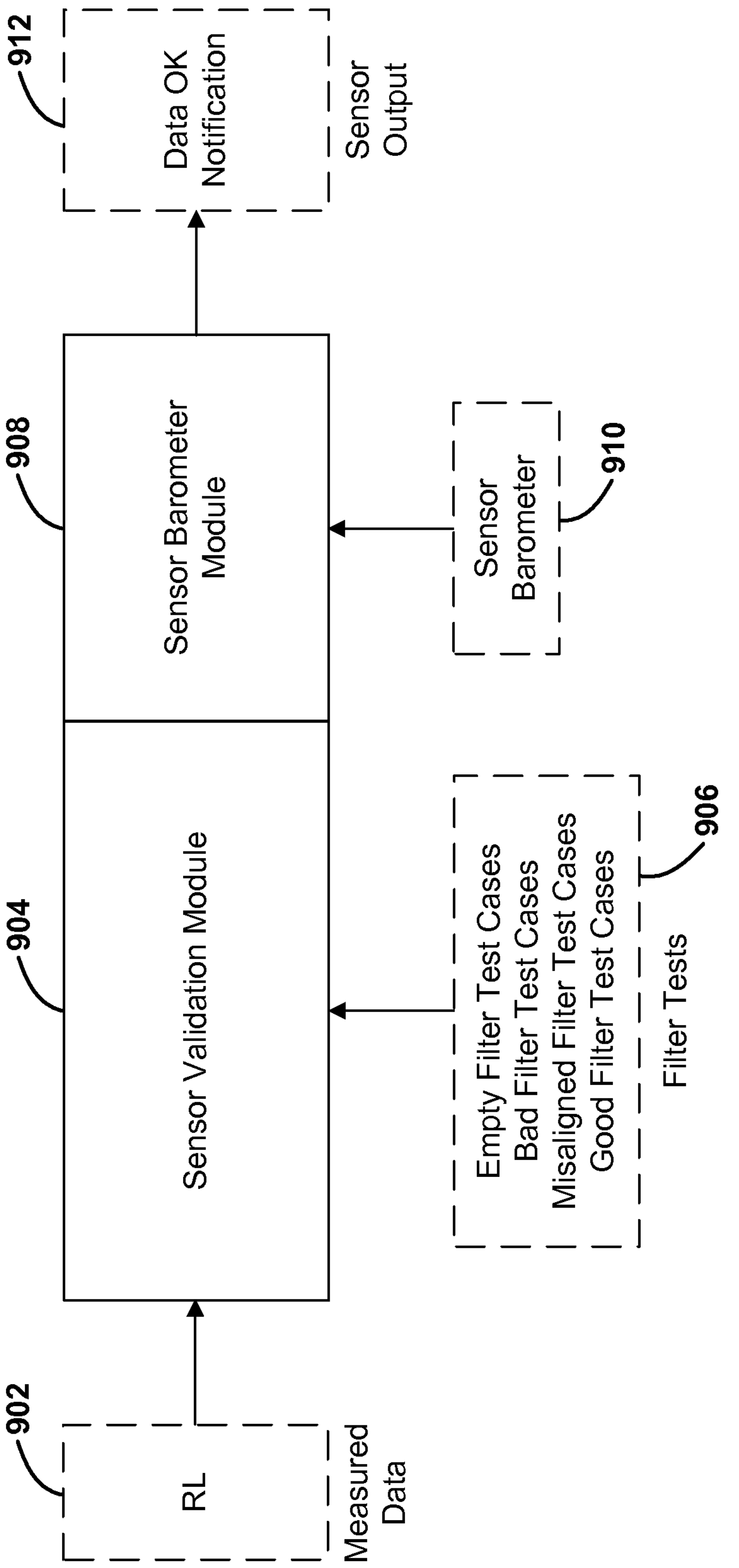
902
RL
Measured Data
904
Sensor Validation Module
906
Empty Filter Test Cases
Bad Filter Test Cases
Misaligned Filter Test Cases
Good Filter Test Cases
Filter Tests
908
Sensor Barometer Module
910
Sensor Barometer
912
Data OK Notification
Sensor Output

FIG. 8

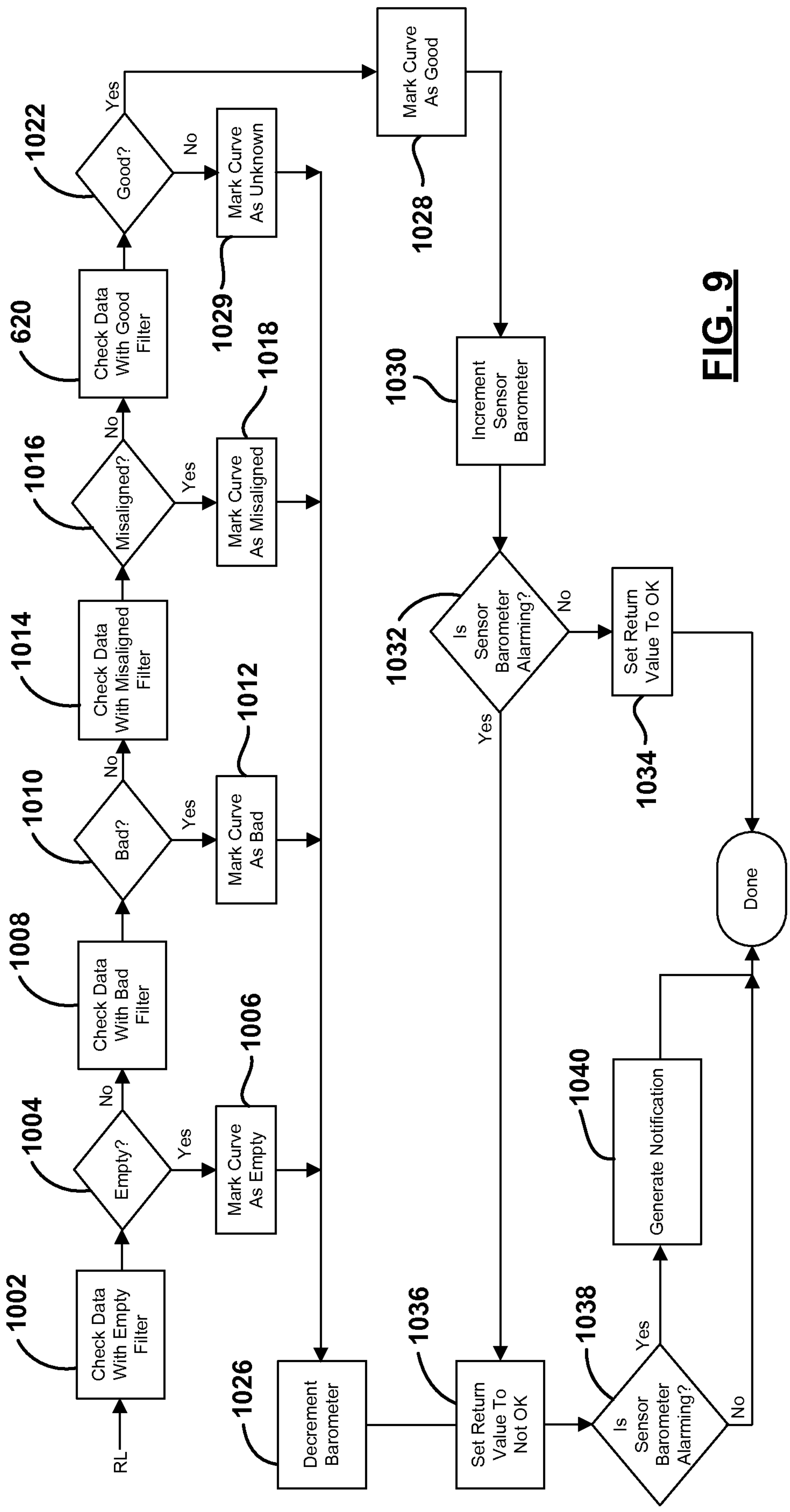
RL
Check Data With Empty Filter
1002
Empty?
1004
Yes
No
Mark Curve As Empty
1006
Check Data With Bad Filter
1008
Bad?
1010
Yes
No
Mark Curve As Bad
1012
Check Data With Misaligned Filter
1014
Misaligned?
1016
Yes
No
Mark Curve As Misaligned
1018
Check Data With Good Filter
620
Good?
1022
Yes
No
Mark Curve As Unknown
1029
Mark Curve As Good
1028
Decrement Barometer
1026
Increment Sensor Barometer
1030
Is Sensor Barometer Alarming?
1032
Yes
No
Set Return Value To OK
1034
Set Return Value To Not OK
1036
Is Sensor Barometer Alarming?
1038
Yes
No
Generate Notification
1040
Done

FIG. 9

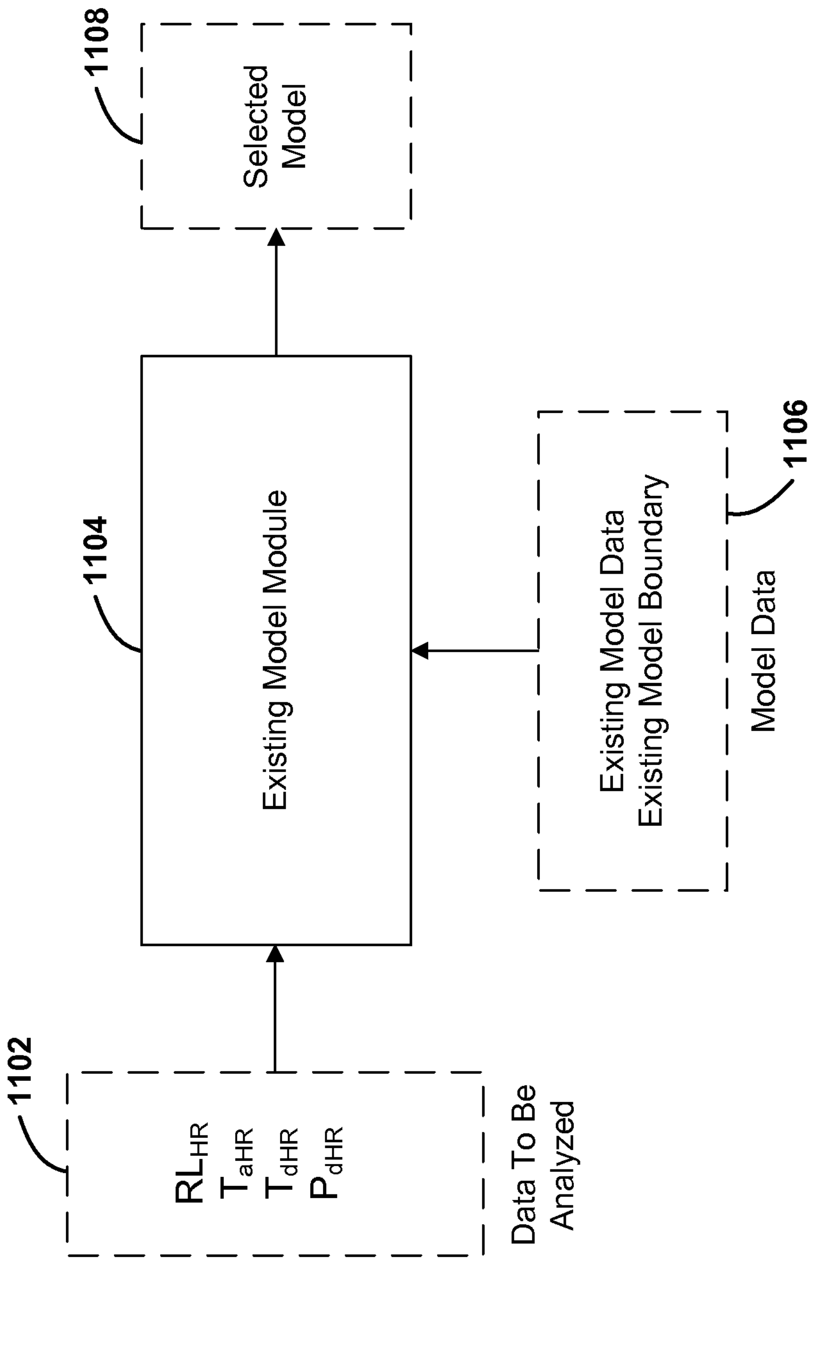
1108
Selected Model
1104
Existing Model Module
1106
Existing Model Data
Existing Model Boundary
Model Data
1102
$RL_{HR}$
$T_{aHR}$
$T_{dHR}$
$P_{dHR}$
Data To Be Analyzed

FIG. 10

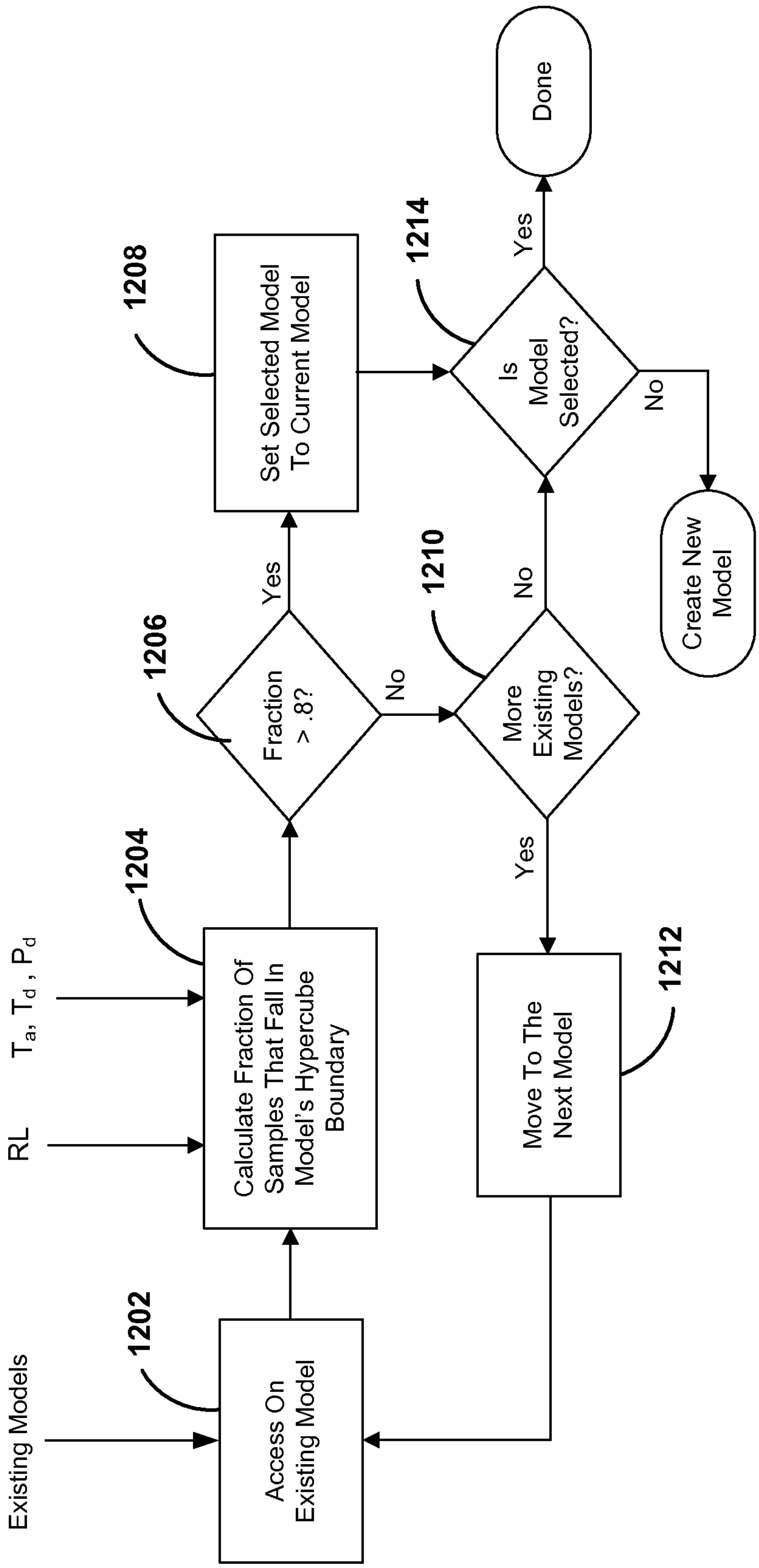
Existing Models
RL
$T_a$, $T_d$ , $P_d$
1202
Access On Existing Model
1204
Calculate Fraction Of Samples That Fall In Model's Hypercube Boundary
1206
Fraction > .8?
Yes
No
1208
Set Selected Model To Current Model
1210
More Existing Models?
Yes
No
1212
Move To The Next Model
1214
Is Model Selected?
Yes
No
Done
Create New Model

FIG. 11

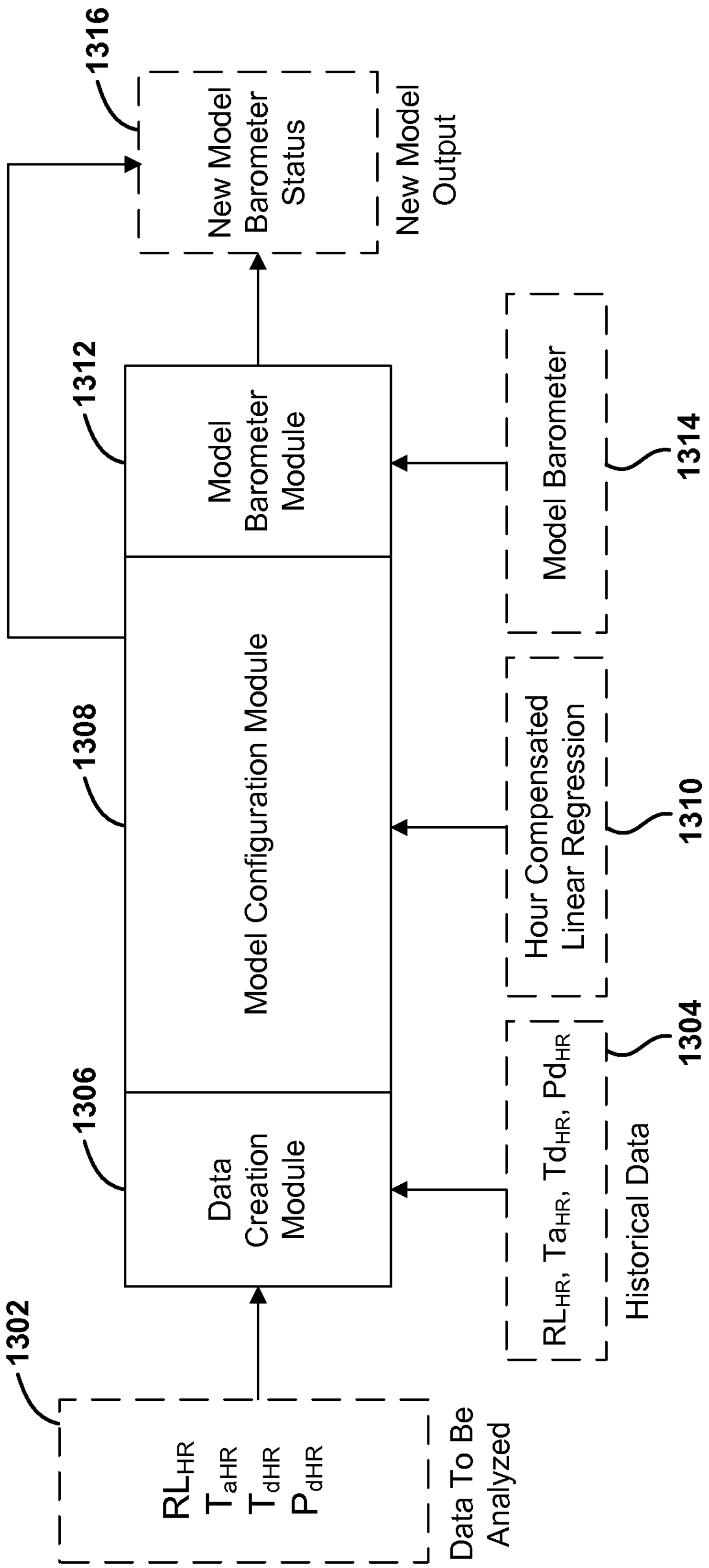
1302
RLHR
TaHR
TdHR
PdHR
Data To Be Analyzed
1306
Data Creation Module
1308
Model Configuration Module
1312
Model Barometer Module
1316
New Model Barometer Status
New Model Output
RLHR, TaHR, TdHR, PdHR
Historical Data
1304
Hour Compensated Linear Regression
1310
Model Barometer
1314

FIG. 12

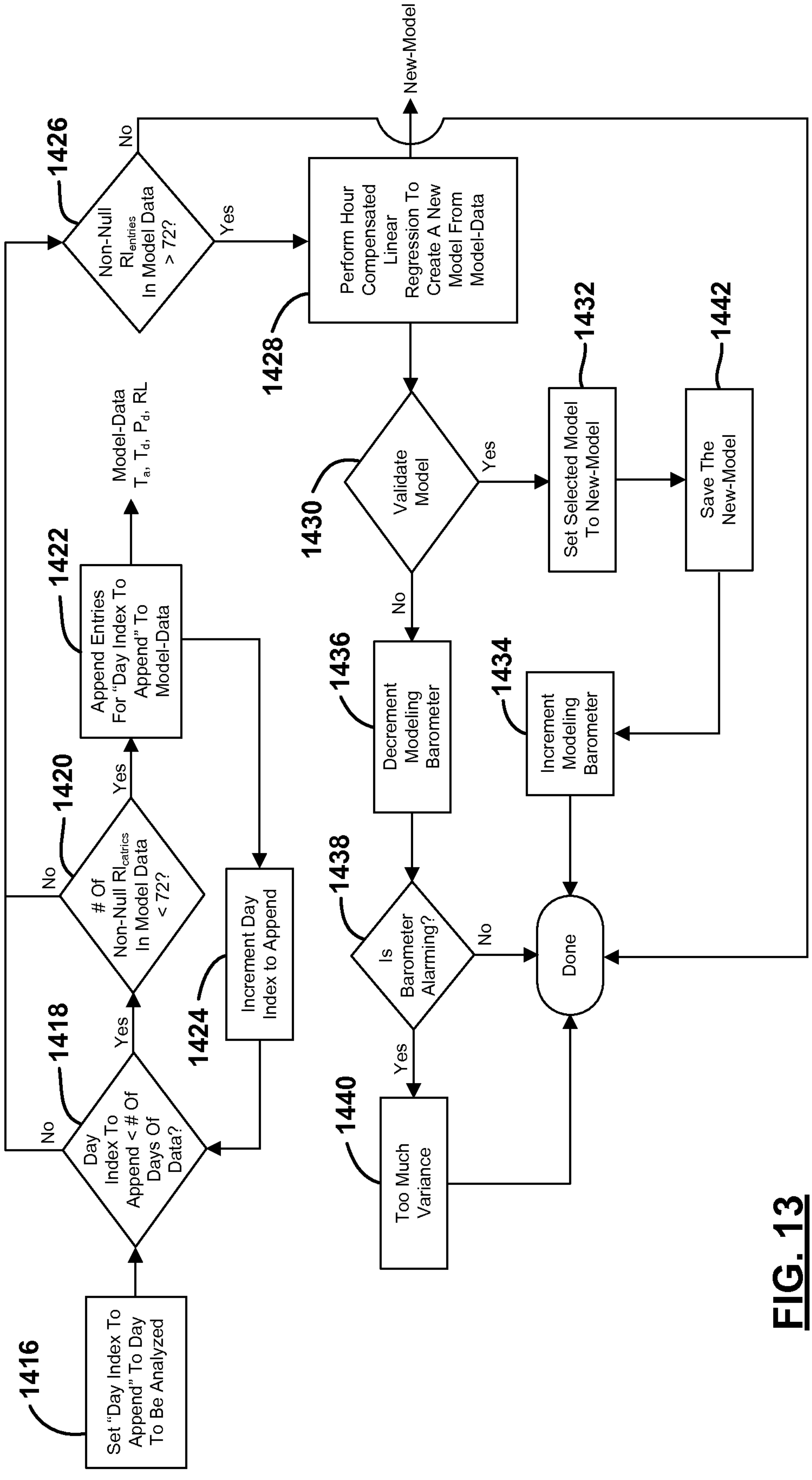
1416
Set "Day Index To Append" To Day To Be Analyzed
1418
Day Index To Append < # Of Days Of Data?
Yes
No
1420
# Of Non-Null RIcatrics In Model Data < 72?
Yes
No
1422
Append Entries For "Day Index To Append" To Model-Data
Model-Data
Ta, Td, Pd, RL
1424
Increment Day Index to Append
1426
Non-Null RIentries In Model Data > 72?
Yes
No
1428
Perform Hour Compensated Linear Regression To Create A New Model From Model-Data
New-Model
1430
Validate Model
Yes
No
1432
Set Selected Model To New-Model
1442
Save The New-Model
1436
Decrement Modeling Barometer
1434
Increment Modeling Barometer
1438
Is Barometer Alarming?
Yes
No
1440
Too Much Variance
Done

FIG. 13

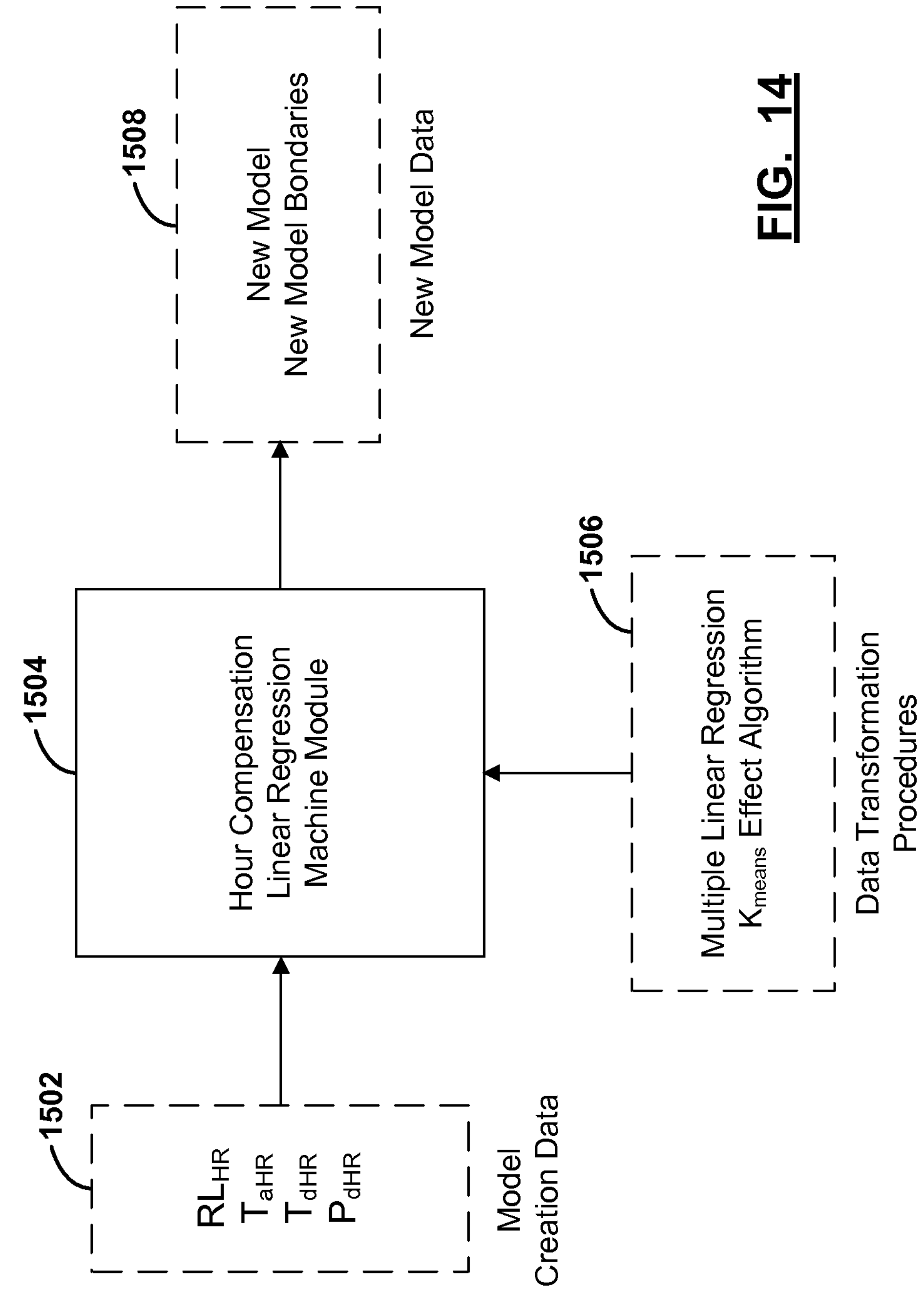
1502
RLHR
TaHR
TdHR
PdHR
Model
Creation Data
1504
Hour Compensation
Linear Regression
Machine Module
1506
Multiple Linear Regression
Kmeans Effect Algorithm
Data Transformation
Procedures
1508
New Model
New Model Bondaries
New Model Data

FIG. 14

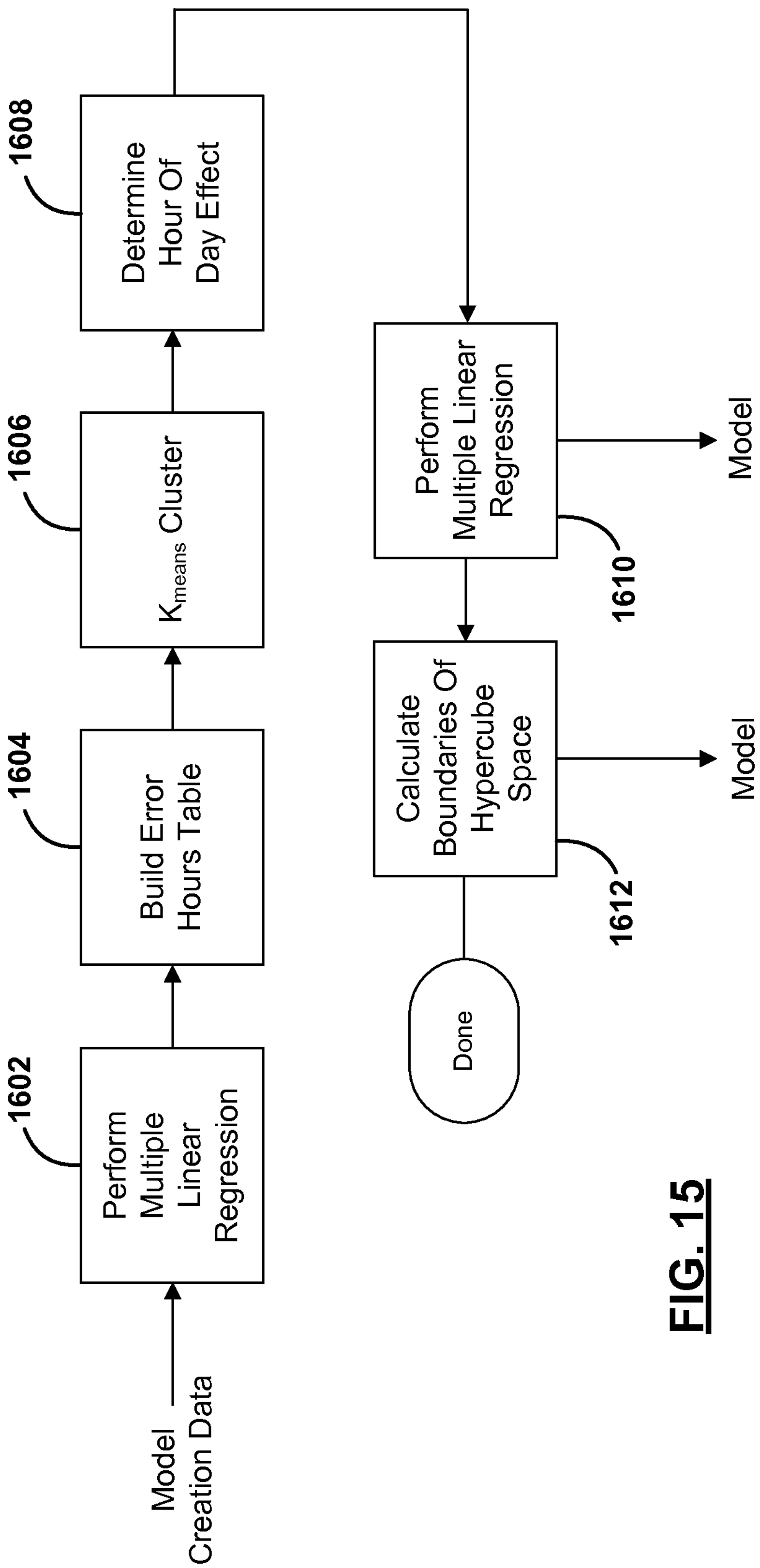
Model Creation Data
1602
Perform Multiple Linear Regression
1604
Build Error Hours Table
1606
$K_{means}$ Cluster
1608
Determine Hour Of Day Effect
1610
Perform Multiple Linear Regression
Model
1612
Calculate Boundaries Of Hypercube Space
Model
Done

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006042276 A
- US 2008033674 A
- US 2006021362 A
- US 2007089435 A